# EUROPEAN PATENT SPECIFICATION

(11) **EP 4 246 666 B1**
(45) Date of publication and mention of the grant of the patent: **16.07.2025**
(21) Application number: 23161653.3
(22) Date of filing: 14.03.2023
(51) Int. Cl.: H01M 10/613, H01M 10/647, H01M 10/653, H01M 10/658, H01M 50/211, H01M 50/262, H01M 50/291, H01M 50/342, H01M 50/367

(54) **BATTERY MODULE AND BATTERY PACK INCLUDING THE SAME**
BATTERIEMODUL UND BATTERIEPACK DAMIT
MODULE DE BATTERIE ET BLOC-BATTERIE LE COMPRENANT

(30) Priority: 14.03.2022 KR 20220031704
(43) Date of publication of application: 20.09.2023
(73) Proprietor: SK On Co., Ltd., Seoul 03161 (KR)
(72) Inventor: YOO, Tak Kyung, Daejeon 34124 (KR); RHEE, Seo Roh, Daejeon 34124 (KR); LEE, Seung Hun, Daejeon 34124 (KR); CHOI, Yang Kyu, Daejeon 34124 (KR)
(74) Representative: Prüfer & Partner mbB Patentanwälte · Rechtsanwälte

(56) References cited:
- EP-A1- 3 958 379
- CN-A- 113 889 690
- US-A1- 2018 138 565
- US-B2- 9 859 533

## Description

### BACKGROUND

### 1. FIELD

The present disclosure relates to a battery module and a battery pack including the same.

### 2. DESCRIPTION OF RELATED ART

A secondary battery may be charged and discharged differently from primary batteries, and has attracted attention as a power source of various mobile devices and electric vehicles. For example, a secondary battery using a non-aqueous electrolyte having high energy density may have good output, and may be used to drive a motor of an electric vehicle by connecting a plurality of the secondary batteries in series.

A battery module applied to an electric vehicle may be modularized by electrically connecting a plurality of battery cells for the need for high power and high capacity, and the electric vehicle may include a battery pack in which a plurality of battery modules are accommodated to obtain high power.

To configure a battery pack or a battery module having a large-capacity and large-area, the number of battery cells may be increased. Accordingly, it may be necessary to improve assembly efficiency and to reduce the weight of the battery module by simplifying the structure of the battery module.

Also, an electrode assembly of a battery cell may generate heat while charging and discharging, and internal temperature of a battery module may increase due to the heat generation, such that electrical performance may be deteriorated or ignition may occur. Moreover, when a large number of battery modules or battery cells are mounted in a battery pack, flames generated by ignition of a battery module may spread to other battery modules or other battery cells, such that a chain of ignition or explosion may occur.

A general battery pack may have a complicated heat transfer path from a battery cell to the outside of the battery pack, such that heat dissipation and cooling performance may be deteriorated.

Documents EP 958 379 A1 and CN 113 889 690 A disclose a battery pack comprising a pack housing including a lower frame and a side frame and battery modules accommodated in the pack housing. The battery modules include a plurality of cell stacks in which a plurality of battery cells are stacked in a first direction and a plurality of end plates fastened to the lower frame. The plurality of end plates and the plurality of cell stacks are alternately disposed in the first direction.

### SUMMARY

An aspect of the present disclosure is to provide a battery pack having a simplified structure and improved assembly efficiency.

An aspect of the present disclosure is to provide a structure which may allow a battery module to be accurately and stably combined in a battery pack.

An aspect of the present disclosure is to provide a battery pack which may, by reducing a heat transfer path from a battery cell to the battery pack, increase heat dissipation efficiency.

According to an aspect of the present disclosure, a battery pack includes a pack housing including a lower frame and a side frame; and one or more battery modules accommodated in the pack housing, wherein the battery module includes a plurality of cell stacks in which a plurality of battery cells are stacked in a first direction; and a plurality of end plates fastened to the lower frame, and wherein the plurality of end plates and the plurality of cell stacks are alternately disposed in the first direction.

The battery pack may further include a fastening member fastening the end plate and the lower frame to each other, and the fastening member penetrates through the end plate and is fixed to the lower frame.

The battery module may further include a heat dissipation member disposed between the cell stack and the lower frame.

One surface of the heat dissipation member may be in contact with at least one of the plurality of battery cells, and the other surface opposite to the one surface of the heat dissipation member may be in contact with the pack housing.

The pack housing further may include a cooling member disposed on the lower frame, and the cooling member may be in contact with the other surface of the heat dissipation member.

The heat dissipation member may include a thermally conductive adhesive.

The side frame includes a guide block protruding in a second direction perpendicular to the first direction, and at least one of the plurality of end plates includes an insertion groove into which the guide block is inserted.

The battery pack further includes a venting passage having at least a portion extending in the first direction formed in the side frame, and the side frame includes a plurality of openings communicating with the venting passage and an internal space of the pack housing, and wherein the guide block is disposed between the plurality of openings.

The battery module may further include a first heat insulating member disposed between at least one of the plurality of end plates and the cell stack and configured to prevent heat transfer.

The battery module may further include a busbar assembly electrically connected to the cell stack, the busbar assembly opposing the cell stack in a second direction perpendicular to the first direction.

The battery cell assembly may include the plurality of battery cells opposing each other in the first direction; and a plurality of support members spaced apart from each other in the second direction and supporting the plurality of battery cells, and the busbar assembly may be coupled to at least one of the plurality of support members.

The battery cell assembly may include a second heat insulating member disposed between two of the plurality of battery cells and configured to prevent heat transfer between the plurality of battery cells.

The battery module may further include a cover plate coupled to the one or more cell stacks and the plurality of end plates.

The battery module may further include a plurality of reinforcing members disposed under the plurality of cell stacks and the plurality of end plates, and wherein a lower surface of the cell stack is exposed between the plurality of reinforcing members and faces the pack housing.

The plurality of cell stacks and the plurality of end plates may be alternately disposed in the first direction, and the battery module may include N number of the cell stacks and N+1 number of the end plates, where N is a natural number of 2 or more.

According to an aspect of the present disclosure, a battery pack includes a pack housing having an internal space; and a battery module accommodated in the internal space, wherein the battery module includes a plurality of sub-modules disposed to space apart from each other in the first direction, and each of the plurality of sub-modules includes a plurality of battery cell assemblies stacked in a first direction, and wherein the battery cell assembly includes a plurality of battery cells opposing each other in the first direction; and a heat insulating member disposed between the plurality of battery cells and blocking heat transfer between the plurality of battery cells.

The battery module may further include one or more end plates opposing at least one of the plurality of sub-modules in the first direction.

The plurality of sub-modules and the one or more end plates may be alternately disposed in the first direction, and the battery module may include N number of the sub-modules and N+1 number of the end plates, where N may be a natural number of 2 or more.

According to an aspect of the present disclosure, a battery module includes a plurality of sub-modules; a plurality of end plates coupled to the plurality of sub-modules; and a cover plate coupled to one side of at least one of the plurality of sub-modules and the plurality of end plates.

The battery module may further include a heat dissipation member coupled to the other side of at least one of the plurality of sub-modules and the plurality of end plates.

The battery module may further include a reinforcing member coupled to the other side of at least one of the plurality of sub-modules and the plurality of end plates.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective diagram illustrating a battery pack according to an example embodiment of the present disclosure;
FIG. 2 is an exploded perspective diagram illustrating a battery pack according to an example embodiment of the present disclosure;
FIG. 3 is an exploded perspective diagram illustrating a battery module according to an example embodiment of the present disclosure;
FIG. 4 is a perspective diagram illustrating a battery sub-module according to an example embodiment of the present disclosure;
FIG. 5 is an exploded perspective diagram illustrating a battery sub-module according to an example embodiment of the present disclosure;
FIG. 6 is an exploded perspective diagram illustrating a battery cell assembly according to an example embodiment of the present disclosure;
FIG. 7 is a perspective diagram illustrating a battery cell included in a battery cell assembly according to an example embodiment of the present disclosure;
FIG. 8 is an exploded perspective diagram illustrating a protective member and a support member included in the battery cell assembly according to an example embodiment of the present disclosure;
FIG. 9 is a perspective diagram illustrating a support member included in a battery cell assembly according to an example embodiment of the present disclosure;
FIG. 10 is a diagram illustrating a state in which a battery cell assembly is seated on a seating surface according to an example embodiment of the present disclosure;
FIG. 11 is a diagram illustrating a state in which battery cell assemblies are stacked along a seating surface according to an example embodiment of the present disclosure;
FIG. 12 is an enlarged perspective diagram illustrating a portion of a battery cell assembly according to an example embodiment of the present disclosure;
FIG. 13 is a cross-sectional diagram taken along line IV-IV' in FIG. 12;
FIG. 14 is a diagram illustrating coupling of a battery cell assembly according to an example embodiment of the present disclosure, viewed from above;
FIG. 15 is an exploded perspective diagram illustrating a busbar assembly coupled to a cell stack according to an example embodiment of the present disclosure;
FIG. 16 is a diagram illustrating a state in which a busbar assembly is coupled to a battery cell assembly according to an example embodiment of the present disclosure;
FIG. 17 is a cross-sectional diagram illustrating a state in which a busbar assembly is coupled to a cell stack according to an example embodiment of the present disclosure;
FIG. 18 is an exploded perspective diagram illustrating a cover assembly according to an example embodiment of the present disclosure;
FIG. 19 is a cross-sectional diagram taken along line VI-VI' in FIG. 18 in a state in which the cover assembly is coupled to the busbar assembly;
FIG. 20 is a diagram illustrating an assembly sequence of a battery sub-module according to an example embodiment of the present disclosure;
FIG. 21 is a perspective diagram illustrating an end plate included in a battery module according to an example embodiment of the present disclosure;
FIG. 22 is a diagram illustrating accommodation of a battery module in a battery pack according to an example embodiment of the present disclosure;
FIG. 23 is a cross-sectional diagram taken along line I-I' in FIG. 2;
FIG. 24 is a cross-sectional diagram taken along line II-II' in FIG. 2;
FIG. 25 is a diagram illustrating a partition structure of a battery pack according to an example embodiment of the present disclosure;
FIG. 26 is a cross-sectional diagram taken along line III-III' in FIG. 2; and
FIG. 27 is a diagram illustrating a portion of a battery pack in which a battery module is accommodated according to an example embodiment of the present disclosure, viewed from above.

### DETAILED DESCRIPTION

Hereinafter, embodiments of the present disclosure will be described as follows with reference to the attached drawings.

The present disclosure may, however, be exemplified in many different forms and should not be construed as being limited to the specific embodiments set forth herein. Rather, these embodiments are provided such that this disclosure will be thorough and complete, and will fully convey the scope of the disclosure to those skilled in the art. Accordingly, shapes and sizes of the elements in the drawings may be exaggerated for clarity of description. Also, elements having the same function within the scope of the same concept represented in the drawing of each example embodiment will be described using the same reference numeral.

Overlapping descriptions and detailed descriptions of known functions and elements which may unnecessarily make the gist of the present disclosure obscure will not be provided. In the accompanying drawings, a portion of elements may be exaggerated, omitted or briefly illustrated, and the sizes of the elements may not necessarily reflect the actual sizes of these elements.

An expression used in the singular encompasses the expression of the plural, unless it has a clearly different meaning in the context. In the drawings, same elements will be indicated by same reference numerals.

In example embodiments, terms such as an upper side, an upper portion, a lower side, a lower portion, a side surface, a front surface, a rear surface, or the like, are represented based on the directions in the drawings, and may be used differently if the direction of an element is changed.

The terms "first," "second," and the like may be used to distinguish one element from the other, and may not limit a sequence and/or an importance, or others, in relation to the elements. In a portion of cases, a first element may be referred to as a second element, and similarly, a second element may be referred to as a first element without departing from the scope of right of the example embodiments.

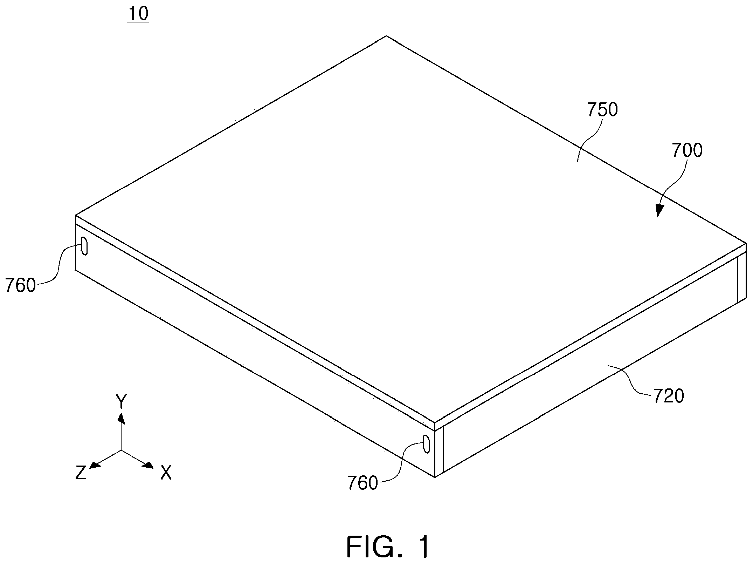

FIG. 1 is a perspective diagram illustrating a battery pack 10 according to an example embodiment.

The battery pack 10 may include one or more battery modules 100 for outputting or storing electrical energy and a pack housing 700 having an internal space in which the battery modules 100 are accommodated.

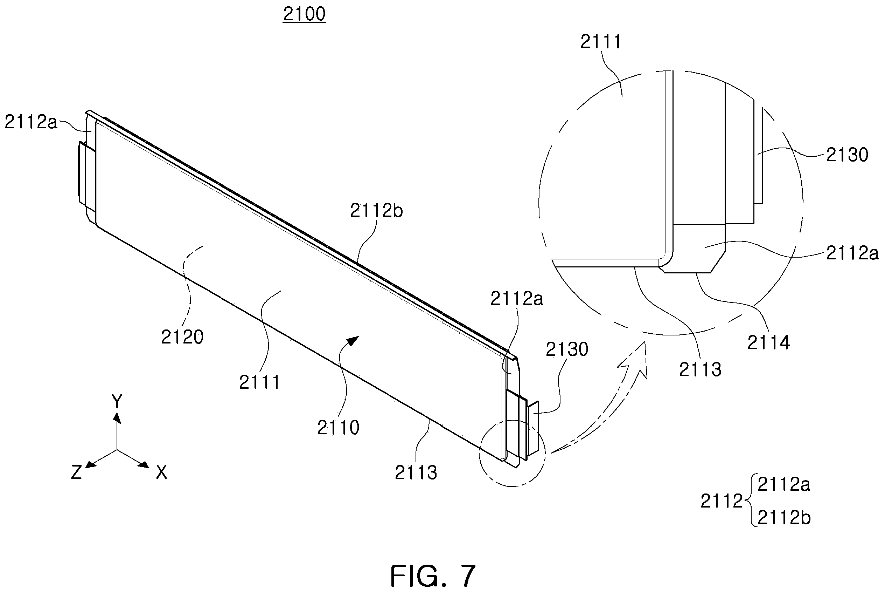

The battery module 100 may include one or more battery cells (e.g., 2100 in FIG. 7) which may be charged and discharged, and may store or discharge electrical energy. For example, the battery cell (2100 in FIG. 7) may be configured as a secondary battery such as a lithium ion battery or a nickel-hydrogen battery.

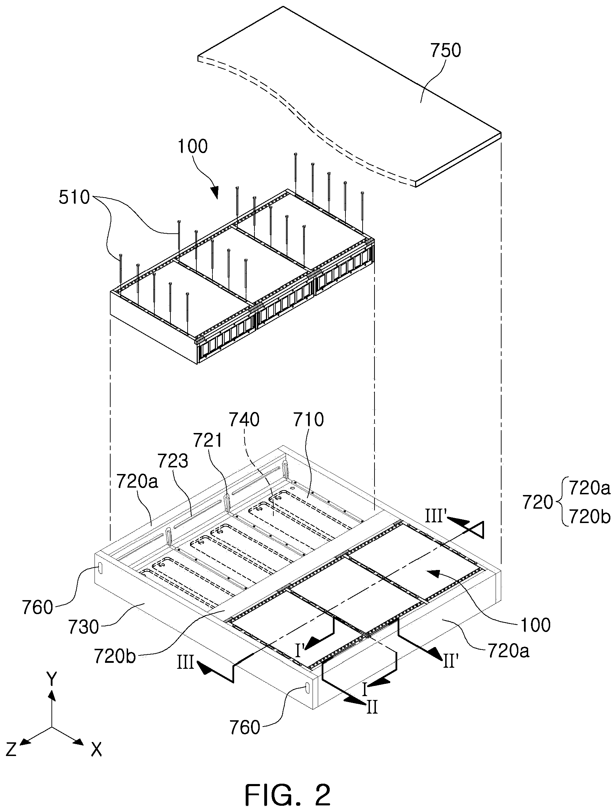

As illustrated in FIG. 2, the battery module 100 may have a substantially hexahedral shape. However, the exterior of the battery module 100 is not limited thereto, and may be provided in various shapes.

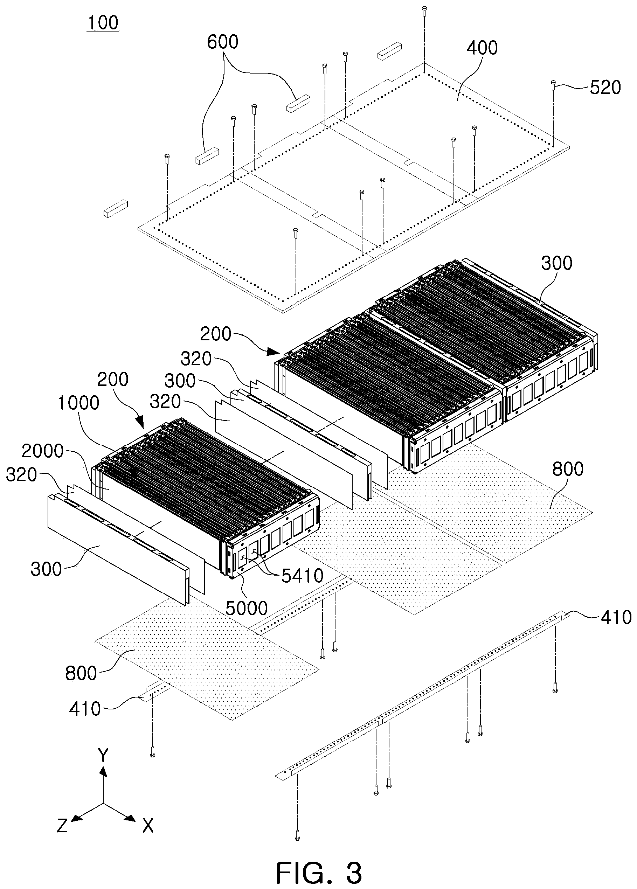

The battery module 100 accommodated in the battery pack 10 may include one or more sub-modules (e.g., 200 in FIG. 3). Each sub-module (200 in FIG. 3) may include a plurality of battery cells. A plurality of sub-modules (200 in FIG. 3) may be arranged side by side in one direction (e.g., the Z-axis direction in FIG. 3) and may form at least a portion of the battery module 100. A manufacturer may determine the number of sub-modules (200 in FIG. 3) required according to a power value required for the battery module 100, may assemble the sub-modules (200 in FIG. 3), thereby manufacturing a battery module 100. A detailed description of the sub-module (200 in FIG. 3) and the battery module 100 including the sub-module will be described later with reference to FIG. 3.

Referring to FIG. 2, the pack housing 700 of the battery pack 10 may include a lower frame 710 on which the battery module 100 is seated, a plurality of support frames 720 coupled to the lower frame 710 and facing at least one side of the battery module 100, and a cover frame 750 covering the internal space.

The lower frame 710 may form the lower surface of the pack housing 700. A plurality of battery modules 100 may be seated on the lower frame 710. For example, the lower frame 710 may be provided as a rectangular plate-shaped member or a polygonal plate-shaped member. However, the specific shape of the lower frame 710 is not limited thereto.

The lower frame 710 may include a material having rigidity. For example, at least a portion of the lower frame 710 may include metal such as aluminum or stainless steel. When the lower frame 710 includes aluminum, heat energy generated in the battery module 100 may be swiftly dissipated to the outside of the battery pack 10 due to excellent thermal conductivity of aluminum.

To increase the heat dissipation effect, the lower frame 710 may include a cooling member 740. The cooling member 740 may be disposed outside the lower frame 710 or in the lower frame 710. A passage through which air or cooling fluid flows may be formed in the cooling member 740.

One or more support frames 720 structurally supporting the battery pack 10 may be coupled to the lower frame 710. The support frame 720 may include a plurality of side frames 720a coupled to the edge of the lower frame 710 and a partition frame 720b disposed between the side frames 720a and partitioning the internal space.

The pack housing 700 may further include an end frame 730 disposed on an end of the support frame 720. The end frame 730 may be coupled to the support frame 720 and may form a side wall of the pack housing 700.

The support frame 720 and the end frame 730 may be formed of a metal material having a predetermined degree of rigidity or higher. For example, for high heat dissipation, at least a portion of the support frame 720 may include aluminum having high thermal conductivity.

In example embodiments, at least two of the lower frame 710, the support frame 720, and the end frame 730 may be integrally formed or may be provided as separate members and may be coupled to each other.

As the battery module 100 is charged and discharged under harsh conditions, flame or high-temperature gas may be generated in the battery module 100. To safely discharge such flame or gas to the outside of the battery module 100, the battery pack 10 may have one or more outlets 760 communicating with the internal space. For example, the outlet 760 may be disposed on at least one surface of the pack housing 700 and may communicate with the internal space of the battery pack 10 through an opening 723 disposed in the support frame 720.

The pack housing 700 may further include a cover frame 750 covering and closing the internal space. For example, the cover frame 750 may be coupled to the support frame 720 on the side opposite to the lower frame 710 and may cover the internal space of the battery pack 10.

A heat spreading prevention member (not illustrated) may be disposed between the cover frame 750 and the battery module 100. For example, the heat spreading prevention member (not illustrated) may be provided as a plate-shaped member including at least one of mica, ceramic wool, and aerogel. The heat spreading prevention member (not illustrated) may prevent flame or high-temperature gas generated from the battery module 100 from being spread to other battery modules 100 along the lower surface of the cover frame 750. Also, the heat spreading prevention member (not illustrated) may prevent flame or high-temperature gas generated from the battery module 100 from being ejected to the upper portion of the battery pack 10.

One or more guide blocks 721 protruding toward the battery module 100 are disposed on the support frame 720. For example, a plurality of guide blocks 721 spaced apart from each other in one direction (e.g., in the Z-axis direction) and protruding toward the battery module 100 may be disposed on the side frame 720a.

At least a portion of the guide block 721 may be inserted into the battery module 100. The guide block 721 may guide the battery module 100 to be accurately seated on the lower frame 710 during the process of manufacturing the battery pack 10. Also, the guide block 721 blocks spreading of high-temperature and high-pressure gas or flame generated in one portion of the battery module 100 to other portions of the battery module 100 or other battery modules.

The battery pack 10 may further include a first fastening member 510 for firmly fixing the battery module 100 to the pack housing 700. For example, the first fastening member 510 may penetrate through the battery module 100 and may be fastened to the lower frame 710, and accordingly, the battery module 100 may be firmly fixed to the lower frame 710. However, the configuration of the first fastening member 510 is not limited to the above example, and any component which may fix the battery module 100 to the pack housing 700 may be used.

FIG. 3 is an exploded perspective diagram illustrating a battery module 100 according to an example embodiment. The battery module 100 described with reference to FIG. 3 may be configured the same as the battery module 100 described with reference to FIGS. 1 and 2, and accordingly, overlapping descriptions will not be provided.

The battery module 100 may include one or more sub-modules 200 and a plurality of end plates 300 opposing at least one side of the sub-modules 200.

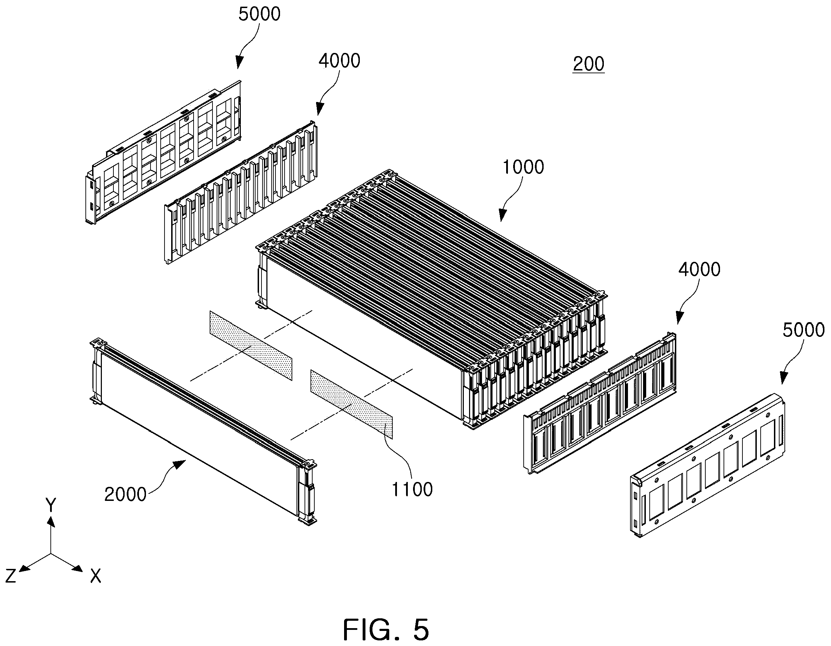

The sub-module 200 may include a cell stack 1000 in which battery cell assemblies 2000 are stacked, a busbar assembly (e.g., 4000 in FIG. 5)electrically connected to the cell stack 1000, and a cover assembly 5000 covering at least one side of the cell stack 1000.

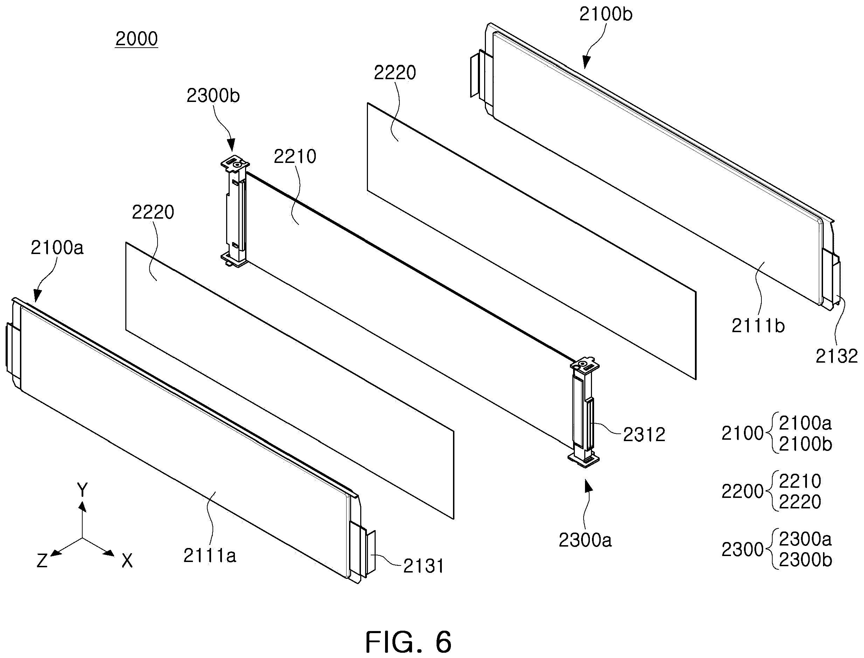

The battery cell assembly 2000 may include a plurality of battery cells (e.g., 2100 in FIG. 6). A battery cell may include an electrode assembly including a positive electrode, a negative electrode, and a separator, and may charge and discharge electrical energy. The battery cell assembly 2000 may be a manufacturing unit of a battery pack (e.g., 10 in FIGS. 1 and 2). For example, a manufacturer may determine the quantity of battery cell assemblies 2000 according to a power value required for a battery pack, may assemble the battery cell assemblies together and may manufacture the cell stack 1000, the sub-module 200, the battery module 100 and the battery pack (10 in FIGS. 1 and 2) in order. A detailed description of the battery cell assembly 2000 will be described later with reference to FIG. 6.

Referring to FIG. 3, a cover assembly 5000 may be disposed on at least one side of the cell stack 1000. The cover assembly 5000 may be fixed to the cell stack 1000 and may protect the battery cell assemblies 2000. The battery cell assemblies 2000 included in the cell stack 1000 may be electrically connected to each other by a busbar assembly disposed between the cover assembly 5000 and the cell stack 1000. As the cell stack 1000 repeatedly performs charging and discharging, flames or high-temperature gas may be generated in the cell stack 1000, and such flame or gas may be discharged to the outside of the battery module 100 through the venting hole 5410 disposed in the cover assembly 5000. The venting hole 5410 may be disposed to oppose a support frame (e.g., 720 in FIG. 2).

The end plate 300 may be disposed to oppose at least one side of the sub-module 200. For example, the end plate 300 may be disposed between the sub-modules 200 or may be disposed on both ends of the battery module 100.

In example embodiments, the sub-module 200 and the end plate 300 of the battery module 100 may be alternately disposed in a first direction (e.g., a Z-axis direction). For example, as illustrated in FIG. 3, the end plate 300 and the sub-module 200 may be alternately disposed from one end of the battery module 100 in the first direction (Z-axis direction) to the other end.

The end plate 300 of the battery module 100 may be fastened to the pack housing (e.g., 700 in FIG. 2). For example, the first fastening member (510 in FIG. 2) may penetrate through at least a portion of the plurality of end plates 300 and may be fastened to the lower frame (710 in FIG. 2) of the pack housing (700 in FIG. 2), and accordingly, the battery module 100 may be fixed to the pack housing (700 in FIG. 2).

The end plate 300 may structurally support the battery module 100 by including a material having rigidity. At least a portion of the plurality of end plates 300 may be disposed between the sub-modules 200 and may block transfer of high-temperature heat or flames between the sub-modules 200. A first heat insulating member 320 may be disposed between the end plate 300 and the sub-module 200, and accordingly, the end plate 300 may block heat or flames more effectively. The first heat insulating member 320 may be attached to one surface of the end plate 300 through an adhesive material such as a binder.

The end plate 300 is assembled with the guide block (721 in FIG. 2) of the support frame 720 and form a partition structure between the sub-modules 200, and accordingly, spreading of high-temperature gas or flame from one sub-module 200 to another sub-module 200 may be prevented or blocked.

When the battery module 100 has a plurality of sub-modules 200, one sub-module 200 and another sub-module 200 may be electrically connected to each other by a connecting member 600. For example, the connecting member 600 may include a conductive material and may be disposed to be in contact with both adjacent sub-modules 200.

A cover plate 400 may be coupled to an upper side (e.g., in a positive Y-axis direction) of the sub-module 200 and the end plate 300. A second fastening member 520 may be used for coupling the sub-module 200 to the cover plate 400 or coupling the end plate 300 to the cover plate 400 together. For example, the second fastening member 520 may be a bolt penetrating through the cover plate 400 and fastened to the cell stack 1000 of the sub-module 200.

The sub-module 200 and the end plate 300 may be combined with the cover plate 400. For example, the sub-module 200 and the end plate 300 may be disposed to oppose each other in a first direction (e.g., Z-axis direction), and may oppose and be fasten to the cover plate 400 in a direction perpendicular to the first direction (Z-axis direction) (e.g., Y-axis direction). The sub-module 200 and the end plate 300 may be coupled to the cover plate 400 such that positions thereof relative to each other may be fixed.

The battery module 100 may further include a reinforcing member 410 coupled to at least one of the sub-module 200 and the end plate 300, in addition to the cover plate 400. For example, as illustrated in FIG. 3, a reinforcing member 410 covering lower (e.g., negative Y-axis) corners of the sub-module 200 and the end plate 300 may be disposed. The reinforcing member 410 may be coupled to the sub-module 200 or the end plate 300 through the second fastening member 520.

To increase heat dissipation efficiency, the battery module 100 may further include a heat dissipation member 800. The heat dissipation member 800 may be disposed on a surface of the battery module 100 facing the lower frame (710 in FIG. 2) or the cover frame (750 in FIG. 2), and may be in contact with at least a portion of the cell stack 1000. For example, as illustrated in FIG. 3, the heat dissipation member 800 may be disposed below the cell stack 1000. The heat dissipation member 800 may be disposed to fill a gap between the cell stack 1000 and the lower frame (710 in FIG. 2), and accordingly, a heat transfer path by conduction may be formed between the battery module 100 and the pack housing. For example, the heat dissipation member 800 may be a thermal adhesive.

In the description below, a direction in which a sub-module and an end plate oppose each other may be defined as a first direction, a direction in which a battery cell assembly of a sub-module and a cover assembly oppose each other may be defined as a second direction, and a direction in which the sub-module and the lower frame oppose each other may be defined as a third direction.

The battery module 100 may be seated on and fixed to the lower frame (710 in FIG. 2) of the pack housing. For example, at least a portion of the plurality of end plates 300 spaced apart from each other in the first direction (Z-axis direction) may be fastened to the lower frame (710 in FIG. 2), such that the battery module 100 may be fixed to the lower frame (710 in FIG. 2). In the process of seating the battery module 100, the end plate 300 may be assembled with a guide block (721 in FIG. 2) of the pack housing (700 in FIG. 2) and the battery module 100 may be guided to be seated in an accurate position. Simultaneously, the end plate 300 and the guide block (721 in FIG. 2) may form a structure isolating the plurality of sub-modules 200 included in the battery module 100 from each other.

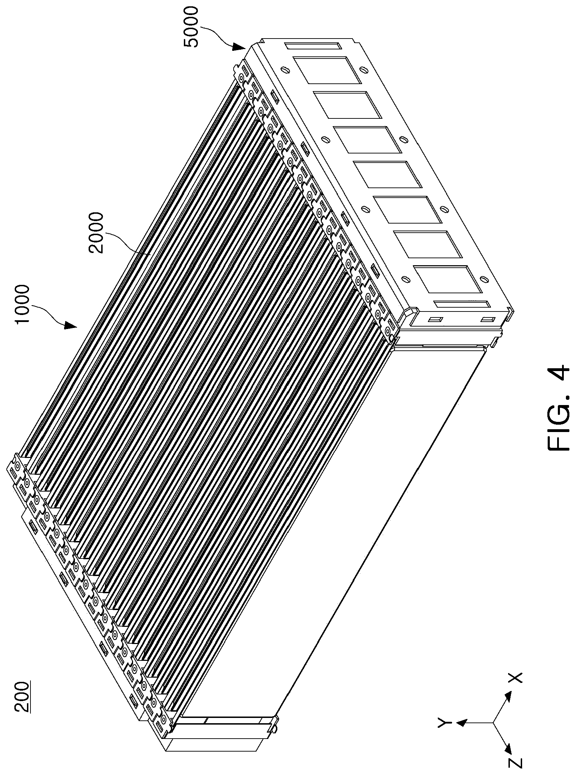

Hereinafter, structures of the sub-module 200 and the end plate 300 included in the battery module 100 will be described in greater detail with reference to FIGS. 4 to 21.

The sub-module 200 included in the battery module 100 will be described with reference to FIGS. 4 and 5.

FIG. 4 is a perspective diagram illustrating a sub-module 200 according to an example embodiment. FIG. 5 is an exploded perspective diagram illustrating a sub-module 200 according to an example embodiment. Since the sub-module 200 described with reference to FIGS. 4 and 5 corresponds to the sub-module 200 described with reference to FIGS. 1 to 3, overlapping descriptions will not be provided.

The sub-module 200 may include one or more battery cell assemblies 2000 for outputting or storing electrical energy, a busbar assembly 4000 electrically connected to the battery cell assembly 2000, and a cover assembly (5000) covering the busbar assembly 4000.

The sub-module 200 may include a plurality of battery cell assemblies 2000. For example, as illustrated in FIG. 4 or 5, the sub-module 200 may include a plurality of battery cell assemblies 2000 stacked and coupled to each other in one direction (e.g., Z-axis direction). The battery cell assembly 2000 may include one or more battery cells 2100 and may charge or discharge electrical energy.

A plurality of the battery cell assemblies 2000 may be stacked in one direction (e.g., the Z-axis direction in FIG. 4) and may form the cell stack 1000. To fix the plurality of battery cell assemblies 2000 to each other, an adhesive member 1100 may be disposed between the battery cell assemblies 2000. The sub-module 200 may include at least one cell stack 1000, and the number of battery cell assemblies 2000 included in each cell stack 1000 may vary.

One battery cell assembly 2000 may be considered as a manufacturing unit of the sub-module 200. For example, a manufacturer may determine the number of battery cell assemblies 2000 according to a power value required for the sub-module 200, and may manufacture the sub-module 200 by assembling the battery cell assemblies together. For example, the sub-module 200 illustrated in FIG. 4 may be formed by combining 16 battery cell assemblies 2000.

In example embodiments, the busbar assembly 4000 may be disposed on at least one side of the cell stack 1000 and may electrically connect the battery cell assemblies 2000 to each other. A pair of busbar assemblies 4000 may be disposed on both ends of the cell stack 1000, respectively. Alternatively, the pair of busbar assemblies 4000 may be integrally formed by being connected to each other.

In example embodiments, the cover assembly 5000 may be coupled to the busbar assembly 4000 or the cell stack 1000 and may cover the busbar assembly 4000. The cover assembly 5000 may prevent the busbar assembly 4000 from being short-circuited with other members and may protect the busbar assembly from receiving external impacts. Also, the cover assembly 5000 may prevent high-temperature heat energy or flame generated from the battery cell assembly 2000 from spreading to other adjacent components (e.g., other adjacent battery modules).

In example embodiments, a plurality of battery cell assemblies 2000 may be stacked and may form the body of the sub-module 200. For example, as illustrated in FIG. 4 or 5, the sub-module 200 may be configured such that the cell stack 1000 may form the body of the sub-module 200 without a case or a housing. A manufacturer may freely adjust the size of the sub-module 200 by configuring the number of battery cell assemblies 2000 in various manners. Also, as the case or housing surrounding the four sides of the battery cell assembly 2000 is not provided, the battery cell assembly 2000 may be directly exposed to the outside, such that heat dissipation efficiency of the sub-module 200 may increase.

The battery cell assembly 2000 may be configured to be easily stacked and assembled. Hereinafter, a battery cell assembly 2000 according to example embodiments will be described in greater detail with reference to FIGS. 6 and 7.

FIG. 6 is an exploded perspective diagram illustrating a battery cell assembly 2000 according to an example embodiment. FIG. 7 is a perspective diagram illustrating a battery cell 2100 included in a battery cell assembly according to an example embodiment.

The battery cell assembly 2000 may include one or more battery cells 2100, a protective member 2200, and a support member 2300. For example, the battery cell assembly 2000 may include a plurality of battery cells 2100 opposing each other, a protective member 2200 disposed between the plurality of battery cells 2100, and a support member 2300 coupled to the protective member 2200.

The battery cell assembly 2000 may include a pair of battery cells 2100 for outputting or storing electrical energy. For example, as illustrated in FIG. 6, the battery cell assembly 2000 may include a first battery cell 2100a and a second battery cell 2100b opposing each other. The pair of battery cells 2100 may be electrically connected to each other through lead tabs 2131 and 2132. Each of the lead tabs 2131 and 2132 may be welded and connected to each other. In this case, the pair of battery cells 2100 may be connected to each other in series or parallel.

In example embodiments, the battery cell 2100 may be a pouch-type battery cell. Referring to FIG. 7, the battery cell 2100 may include a cell body portion 2111 configured in a form in which the electrode assembly 2120 is accommodated in the pouch 2110, and a plurality of lead tabs 2130 electrically connected to the electrode assembly 2120 and exposed to the outside of the pouch 2110.

The electrode assembly 2120 may include a plurality of internal electrode plates. Here, the internal electrode plate may include a positive electrode plate and a negative electrode plate, and the electrode assembly 2120 may be configured in a form in which the positive electrode plate and the negative electrode plate are stacked with a separator interposed therebetween. Each of the plurality of positive electrode plates and the plurality of negative electrode plates may include uncoated regions to which the active material is not applied, and the uncoated regions may be connected to each other such that the same polarities may be in contact with each other. The non-coated portions having the same polarity may be electrically connected to each other and may be electrically connected to other components outside the battery cell 2100 through the lead tab 2130. In the battery cell 2100 illustrated in FIG. 7, the two lead tabs 2130 may be drawn out from both sides of the cell body portion 2111, or may be drawn in the same direction from one of sides of the cell body portion 2111 and may be disposed with different lengths or heights.

The pouch 2110 may surround the electrode assembly 2120, may form the exterior of the cell body portion 2111, and may provide an internal space in which the electrode assembly 2120 and an electrolyte solution (not illustrated) are accommodated. The pouch 2110 may be formed by folding a sheet of exterior material. For example, the pouch 2110 may be configured in a form in which a sheet of exterior material may be folded in half and the electrode assembly 2120 may be accommodated therebetween. The exterior material may be formed of a material for protecting the electrode assembly 2120 from the external environment, and may include, for example, an aluminum film.

An exterior material may be bonded to an edge of the pouch 2110 such that a sealing portion 2112 may be formed. A thermal fusion method may be used to bond the exterior material for forming the sealing portion 2112, but an example embodiment thereof is not limited thereto.

The sealing portion 2112 may include a first sealing portion 2112a formed in a position in which the lead tab 2130 is disposed and a second sealing portion 2112b formed in a position in which the lead tab 2130 is not disposed. To increase reliability of bonding of the sealing portion 2112 and to reduce an area of the sealing portion 2112, at least a portion of the sealing portion 2112 may be folded one or more times.

The sealing portion 2112 may not be formed on a surface on which the pouch 2110 is folded along one edge of the electrode assembly 2120. A folded portion of the pouch 2110 along one edge of the electrode assembly 2120 may be defined as a folded portion 2113 to distinguish the portion from the sealing portion 2112. That is, the pouch 2110-type battery cell 2100 may have a three-surface sealing pouch form in which a sealing portion 2112 may be formed on three of the four edge surfaces of the pouch 2110, and a folded portion 2113 may be formed on the other surface.

When one sheet of exterior material is folded to enclose the electrode assembly 2120 and to seal the three sides as described above, The sealing portion 2112 adjacent to the folded portion 2113 may have a portion protruding further toward a lower direction (e.g., a Y-axis negative direction in FIG. 7) than the folded portion 2113 by the thickness of the cell body portion 2111. For example, as illustrated in the enlarged diagram in FIG. 7, a protrusion 2114 protruding downward of the folded portion 2113 may be formed in a portion from the first sealing portion 2112a to the folded portion 2113. This protrusion 2114 may be referred to as a shark-fin, a delta-fin, or a bat-ear.

The battery cell 2100 of the example embodiments is not limited to the three-sided sealing pouch-type described above. For example, a pouch may be formed using two different exterior materials overlapping each other, and a sealing portion may be formed on four sides around the pouch. For example, the sealing portion may include a sealing portion on two surfaces on which lead tabs are disposed, and a sealing portion on the other two surfaces on which lead tabs are not disposed.

Also, the battery cell 2100 included in the battery cell assembly 2000 of the example embodiments is not limited to the aforementioned pouch-type battery cell, and may be configured as a cylindrical battery cell or a prismatic battery cell.

Referring to FIG. 6, a protective member 2200 may be disposed between the pair of battery cells 2100. The protective member 2200 may include detailed components performing various roles. For example, the protective member 2200 may include a second heat insulating member 2210 disposed between the first battery cell 2100a and the second battery cell 2100b and preventing or blocking heat transfer between the battery cells 2100a and 2100b, and a compression member 2220 applying surface pressure to the battery cell 2100.

The second heat insulating member 2210 may prevent or block spreading of flame or high-temperature thermal energy between neighboring battery cells 2100, thereby preventing chain ignition of the sub-module 200. To this end, the second heat insulating member 2210 may include a material having at least one of flame retardancy, heat resistance, heat insulation, and insulation. For example, heat resistance refer to properties in which a material does not melt and a shape does not change even at a temperature of 600 degrees Celsius or more, and heat insulation may refer to properties in which thermal conductivity is 1.0 W/mK or less. For example, the second heat insulating member 2210 may include at least a portion of mica, silicate, graphite, alumina, ceramic wool, and aerogel for preventing spreading of heat and/or flame. However, the material of the second heat insulating member 2210 is not limited thereto, any material which may maintain a shape thereof in the event of thermal runaway of the battery cell 2100 and may prevent heat or flames from spreading to other adjacent battery cells 2100 may be used.

In example embodiments, the second heat insulating member 2210 may be provided as a plate-shaped sheet or plate-shaped pad having a shape corresponding to the cell body portion 2111. However, the shape of the second heat insulating member 2210 is not limited thereto, and may be formed to have any shape as long as heat transfer between adjacent battery cells 2100 may be blocked with the second heat insulating member 2210 interposed therebetween.

One surface of the compression member 2220 may oppose the second heat insulating member 2210, and the other surface opposite to the one surface may oppose the battery cell 2100. The compression member 2220 may protect the battery cell 2100 from external impact or may absorb expansion pressure due to expansion of the battery cell 2100. Accordingly, thickness expansion due to swelling of the battery cell 2100 may be prevented such that exterior changes of the battery cell assembly 2000 may be reduced and performance degradation of the battery cell 2100 due to swelling may be prevented. To this end, the compression member 2220 may include a material for absorbing the expansion pressure of the battery cell 2100, and may include, for example, a polyurethane-based material.

A plurality of compression members 2220 may be disposed. For example, as illustrated in FIG. 6, compression members 2220 may be disposed on both surfaces of the second heat insulating member 2210, respectively. The compression member 2220 may be attached to the second heat insulating member 2210. To this end, an adhesive member (not illustrated) may be further disposed between the compression member 2220 and the second heat insulating member 2210. However, the adhesive member may not be provided, and a state of being adhered to the second heat insulating member 2210 may be maintained due to a predetermined adhesive force of the material of the compression member 2220.

The battery cell 2100 may be in contact with the compression member 2220 and may be adhered to the compression member 2220 by a predetermined adhesive force of the compression member 2220. Alternatively, the battery cell 2100 may be adhered to the compression member 2220 by an adhesive member (not illustrated) disposed between the battery cell 2100 and the compression member 2220. For example, as illustrated in FIG. 6, a pair of compression members 2220 may be disposed with a second heat insulating member 2210 therebetween, and the first battery cell 2100a and the second battery cell 2100b may be in contact with and adhere to a pair of compression members 2220, respectively.

In example embodiments, the protective member 2200 may be disposed to cover the cell body portion 2111 of the battery cell 2100. For example, the protective member 2200 may cover the entire surface of the cell body portion 2111a of the first battery cell 2100a opposing the second battery cell 2100b, such that the cell body portion 2111a of the first battery cell 2100a may be blocked from directly opposing the cell body portion 2111b of the second battery cell 2100b. Accordingly, transfer of high-temperature thermal energy or impact energy generated from the first battery cell 2100a to the second battery cell 2100b may be effectively blocked.

In example embodiments, the battery cell assembly 2000 may include a support member 2300. The support member 2300 may work as a structure supporting the battery cell assembly 2000 by being combined with the protective member 2200. That is, the support member 2300 may be combined with the protective member 2200 and may support the protective member 2200, and may simultaneously support the plurality of battery cells 2100 included in the battery cell assembly 2000. To this end, the support member 2300 may include a material (e.g., a resin material) having a predetermined degree of rigidity.

The support members 2300 may be provided as a pair and may be spaced apart from each other in a direction (X-axis direction) perpendicular to the direction (Z-axis direction) in which the battery cells 2100 oppose each other. The pair of support members 2300 spaced apart from each other may be fixed to both ends of the protective member 2200, respectively.

In example embodiments, the support member 2300 may include a guide groove 2312 for welding the lead tab 2130 of the battery cell 2100. The guide groove 2312 may be a groove extending in a height direction (e.g., Y-axis direction) from at least one surface of the support member 2300, and a plurality of guide grooves 2312 may be disposed side by side with each other. At least a portion of the plurality of guide grooves 2312 may be used to weld the lead tabs 2130 of the battery cells 2100 to each other.

The guide groove 2312 may have a shape of a recessed groove formed on at least one surface of the support member 2300, and may guide the positions in which the lead tabs 2131 and 2132 of the plurality of battery cells 2100a and 2100b are welded to each other. For example, the lead tab 2131 of the first battery cell 2100a and the lead tab 2132 of the second battery cell 2100b may be disposed to oppose the guide groove 2312 of the support member 2300 while overlapping each other. The lead tab 2131 of the first battery cell 2100a and the lead tab 2132 of the second battery cell 2100b may be welded together along the guide groove 2312. To this end, at least a portion of the lead tab 2131 of the first battery cell 2100a and the lead tab 2132 of the second battery cell 2100b may be bent to oppose the guide groove 2312. For example, as illustrated in FIG. 6, at least a portion of the lead tab 2131 of the first battery cell 2100a may be bent in a direction toward the second battery cell 2100b, and at least a portion of the lead tab 2132 of the second battery cell 2100b may be bent in a direction toward the first battery cell 2100a.

The length of the guide groove 2312 in the Y-axis direction may be wider than the width of the lead tab 2130 of the battery cell 2100 in the Y-axis direction.

The guide groove 2312 may be disposed on a surface of a support member 2300a oriented to the other support member 2300b. That is, as illustrated in FIG. 6, the guide groove 2312 may be disposed on a surface of the first support member 2300a opposite to a surface oriented to the second support member 2300b. Accordingly, the guide groove 2312 may be disposed on a surface of the support member 2300 oriented to the outside of the battery cell assembly 2000.

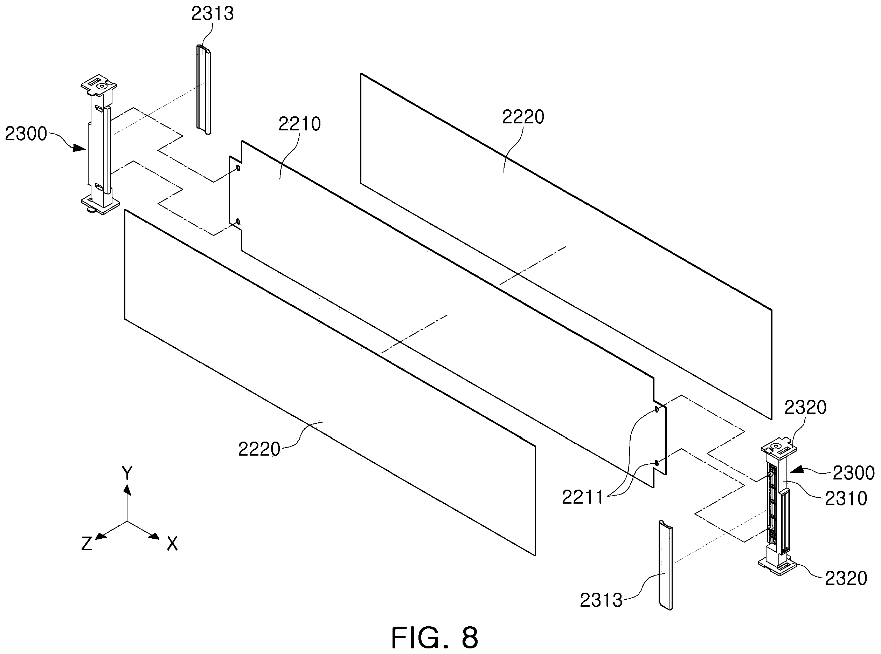

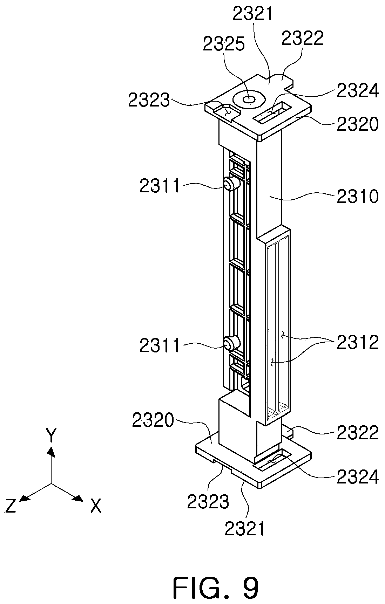

The support member 2300 will be described in greater detail with reference to FIGS. 8 and 9. FIG. 8 is an exploded perspective diagram illustrating a protective member 2200 and a support member 2300 included in the battery cell assembly according to an example embodiment. FIG. 9 is a perspective diagram illustrating a support member 2300 according to an example embodiment. The battery cell assembly 2000 described with reference to FIGS. 8 and 9 corresponds to the battery cell assembly 2000 described with reference to FIGS. 3 to 7, and overlapping descriptions will not be provided.

The support member 2300 may be fastened to the protective member 2200. A pair of support members 2300 may be provided and may be disposed to oppose each other in a second direction (X-axis direction) with the protective member 2200 interposed therebetween.

The support member 2300 may include a body portion 2310 coupled to the protective member 2200 and a flange portion 2320 disposed on at least one end of the body portion 2310.

Referring to FIG. 8, the support member 2300 may be fastened and fixed to one end of the second heat insulating member 2210. In this case, the second heat insulating member 2210 may be fastened to the body portion 2310 of the support member 2300. For example, the fastening groove 2211 may be disposed on the end of the second heat insulating member 2210, and the fastening protrusion 2311 disposed on the body portion 2310 of the support member 2300 may be inserted into the fastening groove 2211 of the second heat insulating member 2210 and may be fastened to each other. To prevent the second heat insulating member 2210 from being separated from the support member 2300, the battery cell assembly 2000 may further include a separation prevention member 2313 covering a portion in which the second heat insulating member 2210 and the support member 2300 are coupled to each other. For example, as illustrated in FIG. 8, the body portion 2310 of the support member 2300 and the separation prevention member 2313 may be coupled to each other, and at least a portion of the second heat insulating member 2210 may be fastened therebetween. By including the fastening structure, the second heat insulating member 2210 may be firmly fixed by being fitted between the body portion 2310 and the separation prevention member 2313. The body portion 2310 of the support member 2300 and the separation prevention member 2313 may be hook-coupled or coupled to each other using an adhesive, but the coupling method is not limited thereto. Similarly to the support member 2300, the separation prevention member 2313 may include a material (e.g., metal or resin material) having rigidity.

In example embodiments, the support member 2300 may include a flange portion 2320 disposed on upper and lower ends of the body portion 2310. Referring to FIGS. 8 and 9, the flange portion 2320 may be formed wider than the width of the body portion 2310 on upper and lower ends of the body portion 2310. Here, the upper and lower ends of the body portion 2310 may refer to both ends in a third direction parallel to the short side of the protective member 2200.

The flange portion 2320 may be disposed on both ends of the body portion 2310 in the third direction (e.g., an end in a negative Y-axis direction and an end in a positive Y-axis direction), and may include a support surface 2321 perpendicular to the third direction. The support surface 2321 may be a wide and flat surface formed on at least a portion of the flange portion 2320. When the flange portion 2320 is disposed on each of both ends of the body portion 2310, the support surface 2321 of the flange portion 2320 may form both end surfaces of the support member 2300. For example, as illustrated in FIG. 8, the flange portion 2320 may be disposed on each of both ends of the support member 2300 in the third direction. In this case, the support surface 2321 of each flange portion 2320 may form the outermost surface of the support member 2300 in the third direction. In example embodiments, the support surface 2321 of the flange portion 2320 may be substantially parallel to a direction perpendicular to the wide surface of the protective member 2200 (the first direction). In this case, the first direction may be a direction in which the first battery cell 2100a and the second battery cell 2100b oppose each other. The battery cell assembly 2000 may be seated on a seating surface (or reference surface) outside the battery cell assembly 2000 through the support surface 2321. For example, the seating surface may be a workbench for manufacturing a lower frame (e.g., 710 in FIG. 2 ) of a pack housing (e.g., 700 in FIGS. 1 and 2) in which the battery cell assembly 2000 is accommodated or a cell stack 1000.

A coupling protrusion 2322 and a coupling groove 2323 may be disposed on the flange portion 2320. For example, the coupling protrusion 2322 may protrude in a first direction (Z-axis direction) and may be inserted into a coupling groove 2323 of another neighboring support member 2300. To this end, the flange portion 2320 may have a coupling protrusion 2322 and a coupling groove 2323 on opposite corners, respectively.

A fastening portion 2325 used to fasten the battery cell assembly 2000 to an external component (e.g., a cover of the sub-module 200) may be disposed on the flange portion 2320. The fastening portion 2325 may be fastened with a fastening member (e.g., a bolt). For example, the fastening portion 2325 may have a screw groove for screwing with a bolt. Alternatively, the fastening portion 2325 may be formed of a different material from other portions of the support member 2300.

The flange portion 2320 may include an engaging groove 2324 for coupling with a busbar assembly (e.g., 4000 in FIG. 5). For example, the engaging groove 2324 may be configured as a groove of which at least a portion of the flange portion 2320 penetrates, and at least a portion of the busbar assembly (4000 in FIG. 5) may be inserted into the groove, and the busbar assembly (4000 in FIG. 5) and the battery cell assembly 2000 may be coupled to each other.

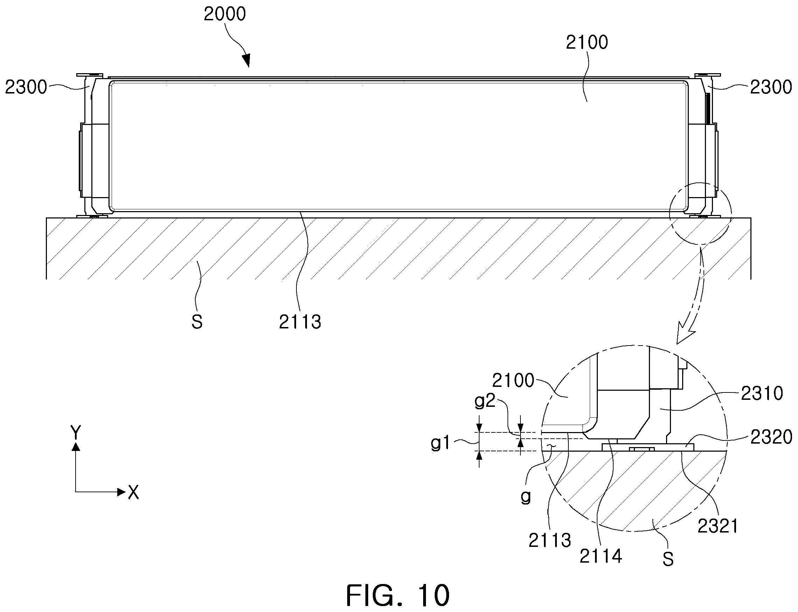

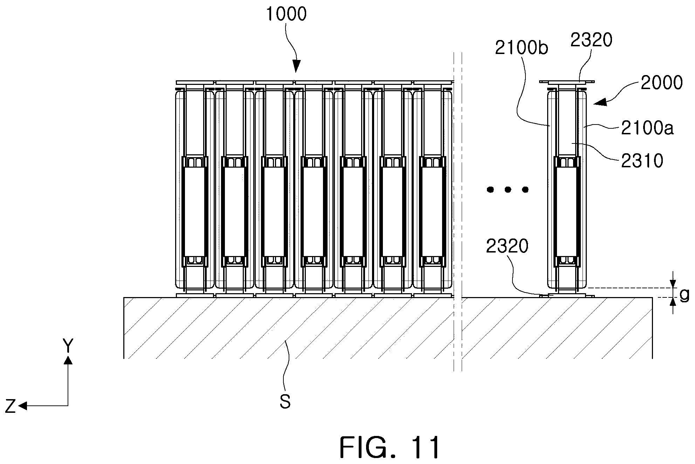

FIG. 10 is a diagram illustrating a state in which a battery cell assembly 2000 is seated on a seating surface S according to an example embodiment. FIG. 11 is a diagram illustrating a state in which battery cell assemblies 2000 are stacked along a seating surface S according to an example embodiment. Referring to FIGS. 10 and 11, the battery cell assembly 2000 may be stably supported through a support surface 2321 such that the folded portion 2113 of each battery cell 2100 may oppose the seating surface S.

When a stack is formed with only the battery cells 2100 without the support members 2300, it may be difficult to accurately align the individual battery cells 2100 with respect to the seating surface S. The seating surface S described herein may be a workbench for manufacturing the cell stack 1000 or a pack housing in which the battery cell assembly 2000 is accommodated.

Also, in the pouch 2110 type battery cell 2100, due to the shark fin 2114 protruding from the folded portion 2113 of the battery cell 2100 or the flatness of the folded portion 2113, it may be difficult to stand the battery cell 2100 such that the folded portion 2113 may oppose the seating surface S. However, the battery cell assembly 2000 may stably stand the battery cell 2100 on the seating surface S through the flat support surface 2321 of the support member 2300. For example, as illustrated in FIG. 10, the support surface 2321 of the pair of support members 2300 may be further disposed below the battery cell 2100 in a negative Y-axis direction. By including this structure, the battery cell assembly 2000 may stand stably on the seating surface S without being disturbed by the shark fin 2114.

In example embodiments, a predetermined spacing g may be formed between the support surface 2321 of the flange portion 2320 and the battery cell 2100. For example, the first battery cell 2100a and the second battery cell 2100b may be spaced apart from each other in a third direction (Y-axis direction) with respect to an imaginary line connecting the support surfaces 2321 of the pair of support members 2300 to each other. Accordingly, a spacing g may be formed between the battery cell 2100 and the external seating surface S in contact with the pair of support surfaces 2321. The gap g1 of the spacing g may be larger than the distance g2 from the folded portion 2113 of the battery cell 2100 to the end of the shark fin 2114.

The battery cell assembly 2000 according to example embodiments may be stably supported by the seating surface S (e.g., a workbench for manufacturing a cell stack (1000)) through the support surface 2321 of the support member 2300 to which the battery cell 2100 is fixed, and accordingly, a plurality of battery cells 2100 may be accurately stacked and disposed in a direction parallel to the seating surface S.

In example embodiments, the folded portion 2113 of the battery cell 2100 included in the battery cell assembly 2000 may be directly exposed to oppose the seating surface S. The sub-module 200 may not have a housing or a case surrounding the battery cell assembly 2000, and accordingly, a rigid member hindering heat transfer between the battery cell 2100 and the seating surface S may not be provided, such that the battery cell 2100 may be disposed to directly oppose the seating surface S outside the sub-module 200. Accordingly, heat dissipation efficiency may be increased in a direction from the battery cell 2100 toward the external seating surface S. Although not illustrated in FIGS. 10 and 11, to further increase heat dissipation efficiency, a heat dissipation member (e.g., 800 in FIG. 3) may be further disposed between the battery cell 2100 and the seating surface S (e.g., the lower surface of the pack housing). For example, the heat dissipation member (e.g., 800 in FIG. 3) may include a thermally conductive adhesive filling the gap such that that a heat transfer path by conduction may be formed between the lower surface (e.g., folded portion 2113) of the battery cell 2100 and the seating surface S. When a heat dissipation member (e.g., 800 in FIG. 3) is disposed, heat conduction may occur actively in a direction from the battery cell 2100 toward the seating surface S, such that safety temperature of the battery cell 2100 may be easily maintained.

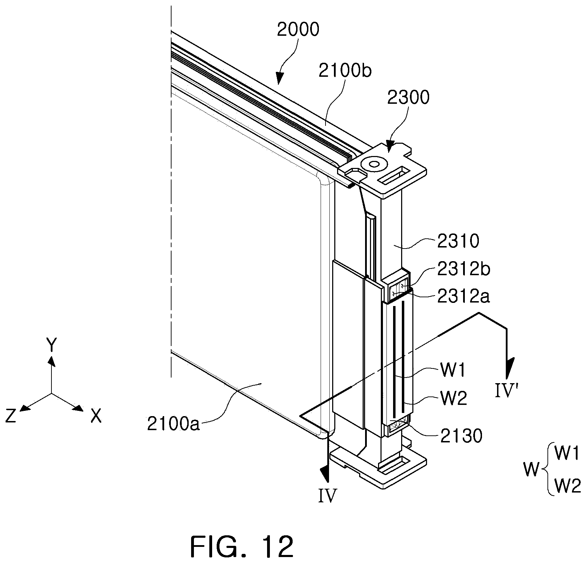

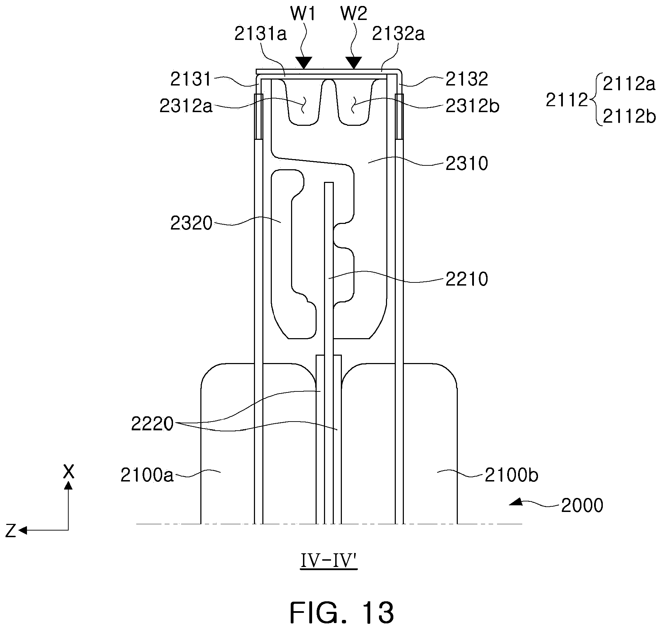

Electrical connections of the battery cells 2100 included in the battery cell assembly 2000 according to example embodiments will be described with reference to FIGS. 12 and 13. FIG. 12 is an enlarged perspective diagram illustrating a portion of a battery cell assembly 2000 according to an example embodiment. FIG. 13 is a cross-sectional diagram taken along line IV-IV' in FIG. 12. Since the battery cell assembly 2000 described with reference to FIGS. 12 and 13 corresponds to the battery cell assembly 2000 described with reference to FIGS. 3 to 11, overlapping descriptions will not be provided.

In example embodiments, the battery cell assembly 2000 may include a first battery cell 2100a and a second battery cell 2100b opposing each other in a first direction (e.g., a Z-axis direction). The first battery cell 2100a and the second battery cell 2100b may be electrically connected to each other through lead tabs 2131 and 2132.

The lead tab of the first battery cell 2100a (hereinafter, first lead tab 2131) and the lead tab of the second battery cell 2100b (hereinafter, second lead tab 2132) may be drawn out from the cell body portions 2111a and 2111b of the battery cells 2100a and 2100b in a second direction (e.g., an X-axis direction) perpendicular to the first direction (Z-axis direction). At least a portion of at least one of the first lead tab 2131 and the second lead tab 2132 may be bent. For example, as illustrated in FIG. 13, at least a portion of the first lead tab 2131 may be bent in a direction toward the second battery cell 2100b, and at least a portion of the second lead tab 2132 may be bent in a direction toward the first battery cell 2100a. As the first lead tab 2131 and the second lead tab 2132 are bent vertically, at least a portion of the two lead tabs 2130 may overlap and may be in contact with each other in the second direction (X-axis direction).

The overlapping portions of the two lead tabs 2131 and 2132 may be coupled to each other by welding. In this case, the welding may be performed by a laser welding method in which a base material (work to be welded) may be welded to each other by irradiating a laser beam. However, the coupling method of the two lead tabs 2131 and 2132 is not limited to welding, and any coupling method for conducting the two lead tabs 2131 and 2132 may be used.

In example embodiments, the first lead tab 2131 and the second lead tab 2132 may be bent in a direction in which the first lead tab 2131 and the second lead tab 2132 oppose each other such that at least portions of the first lead tab 2131 and the second lead tab 2132 may oppose and may be in contact with each other. In the description below, the portion of the first lead tab 2131 opposing and in contact with the second lead tab 2132 may be referred to as a first connection portion 2131a, and the portion of the second lead tab 2132 opposing and in contact with the first lead tab 2131 may be referred to as a second connection portion 2132a. Referring to FIG. 13, the first connection portion 2131a and the second connection portion 2132a may be disposed to oppose the body portion 2310 of the support member 2300 in the second direction (X-axis direction). At least a portion of the first lead tab 2131 and at least a portion of the second lead tab 2132 included in the connection portions 2131a and 2132a may be equal to or greater than the width (e.g., the length in the Z-axis direction) of one side of the support member 2300.

The connection portions 2131a and 2132a of the two lead tabs 2131 and 2132 may be welded along welding regions W1 and W2. At least one welding region W1 and W2 may be formed. For example, the welding regions W1 and W2 may be formed as continuously extending welding lines. For example, the connection portions 2131a and 2132a may be welded along two welding lines extending parallel to each other.

Each of the welding regions W1 and W2 may extend in a third direction (Y-axis direction) perpendicular to both the first direction (Z-axis direction) and the second direction (X-axis direction) on the surface of the connection portion 2131a and 2132a of the two lead tabs 2131 and 2132.

When a plurality of welding regions W1 and W2 are formed, one welding region (e.g., W1) may be formed to weld two lead tabs 2131 and 2132 to each other, and the other one welding region (e.g., W2) may be formed to weld the two lead tabs 2131 and 2132 and another member (e.g., the busbar of the sub-module 200) to each other.

One or more guide grooves 2312 may be formed in the body portion 2310 of the support member 2300 such that the two lead tabs 2131 and 2132 may be stably welded. For example, one or more guide grooves 2312 may be formed on a surface of the body portion 2310 of the support member 2300 opposing the connection portions 2131a and 2132a.

For example, in the guide groove 2312, a recess recessed in the second direction in the body portion 2310 may extend in a third direction (Y-axis direction) perpendicular to the second direction (X-axis direction). The welding regions W1 and W2 for welding the connection portions 2131a and 2132a of the two lead tabs 2131 and 2132 along the guide groove 2312 may be formed. When a plurality of guide grooves 2312 are formed, different welding regions W1 and W2 may be formed along the guide grooves 2312, respectively.

In example embodiments, the guide groove 2312 may include a first guide groove 2312a and a second guide groove 2312b formed parallel to each other. A welding process may be individually performed along each of the guide grooves 2312a and 2312b. In this case, the welding process may be performed in order. For example, in the first welding process, the first lead tab 2131 of the first battery cell 2100a and the second lead tab 2132 of the second battery cell 2100b may be welded in the first welding region W1 formed along the first guide groove 2312a. In the second welding process, the first lead tab 2131, the second lead tab 2132 and other members (e.g. busbar of sub-module 200) may be welded together in the second welding region W2 formed along the second guide groove 2312b. In the process of manufacturing the battery cell assembly 2000, only the first welding process may be performed. Thereafter a second welding process may be performed in a process of coupling the battery cell assembly 2000 and the busbar assembly (e.g., 4000 in FIG. 5) to each other.

The guide groove 2312 may function as a safety space in a welding process. That is, the guide groove 2312 may prevent the battery cell assembly 2000 from being damaged by welding particles or irregular impacts generated from the rear surfaces of the connection portions 2131a and 2132a or shape deformation of the connection portions during welding.

In example embodiments, the first connection portion 2131a, the second connection portion 2132a, and the guide groove 2312 may overlap in a second direction (X-axis direction). For example, as illustrated in FIG. 13, the guide groove 2312, the first connection portion 2131a, and the second connection portion 2132a may be disposed in order in one direction (e.g., the positive X-axis direction). In this case, the one direction (the positive X-axis direction) may be a direction opposite to the direction in which the pair of support members 2300 oppose each other.

FIGS. 12 and 13 illustrate the guide groove 2312 formed in either support member 2300 of the battery cell assembly 2000 and two lead tabs 2130 welded thereto in an opposing manner, but similarly, a guide groove and two lead tabs welded thereto in an opposing manner may be disposed on the support member on the opposite side. That is, the two lead tabs 2131 drawn to both sides from the first battery cell 2100a of the battery cell assembly 2000 and the two lead tabs 2132 drawn to both sides from the second battery cell 2100b may be welded to each other along the guide grooves 2312 of the pair of support members 2300, such that the two battery cells 2100 may be electrically connected to each other.

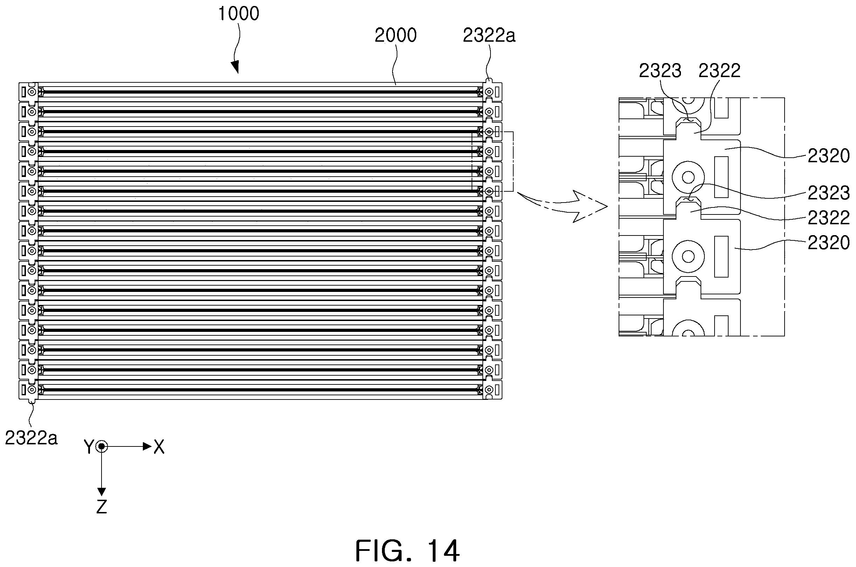

A plurality of battery cell assemblies 2000 including a pair of electrically connected battery cells 2100 may be stacked in one direction and may form at least a portion of the sub-module 200. Hereinafter, coupling between the plurality of battery cell assemblies 2000 will be described with reference to FIG. 14.

FIG. 14 is a diagram illustrating coupling of a battery cell assembly 2000 according to an example embodiment. Since the battery cell assembly 2000 described with reference to FIG. 14 corresponds to the battery cell assembly 2000 described with reference to FIGS. 3 to 13, overlapping descriptions will not be provided.

In example embodiments, a plurality of battery cell assemblies 2000 may be stacked in one direction (e.g., Z-axis direction) and may form the cell stack 1000. An adhesive member (e.g., 1100 in FIG. 5) having adhesive strength may be disposed between the battery cell assemblies 2000, and accordingly, the battery cell assemblies 2000 may be fixed in a stacked state.

The support member 2300 of the battery cell assembly 2000 may include a coupling guide member guiding coupling (stacking) of the battery cell assembly 2000. For example, the coupling guide member may include a coupling protrusion 2322 disposed on the support member 2300 of one of the two battery cell assemblies 2000 opposing each other and a coupling groove 2323 disposed on the support member 2300 of the other battery cell assembly 2000.

The coupling groove 2323 may have a shape of the recess corresponding to the thickness (e.g., length in the Y-axis direction) or a width (e.g., length in the X-axis direction) of the coupling protrusion 2322 such that the coupling protrusion 2322 may be inserted.

Referring to FIG. 14, a coupling protrusion 2322 of one of the battery cell assemblies 2000 may be inserted into a coupling groove 2323 of the other battery cell assembly 2000 neighboring the battery cell assembly 2000, such that the battery cell assemblies 2000 may be guided to be coupled to each other in precise positions.

In example embodiments, the coupling protrusion 2322 and the coupling groove 2323 may be disposed on the flange portion 2320 of the support member 2300. For example, the coupling protrusion 2322 may be configured to protrude from the flange portion 2320 in a first direction (Z-axis direction), and the coupling groove 2323 may be configured to be recessed on the side of the flange portion 2320 opposing the portion from which the coupling protrusion 2322 protrudes. Accordingly, the coupling protrusion 2322 of the flange portion 2320 of one of the battery cell assemblies 2000 may be inserted into the coupling groove 2323 of the flange portion 2320 of the neighboring battery cell assembly 2000.

As the battery cell assemblies 2000 are stacked in order in the first direction (Z-axis direction), the coupling protrusion 2322 of one of the battery cell assemblies 2000 may be inserted into the coupling groove 2323 of the battery cell assembly 2000. In this case, to straighten the side surface of the sub-module 200, the coupling protrusion 2322 of the battery cell assembly 2000 disposed in the outermost portion in the first direction may be cut out.

In example embodiments, each of a pair of support members 2300 included in the battery cell assembly 2000 may have a coupling guide member. For example, as illustrated in FIG. 14, a pair of support members 2300 included in one battery cell assembly 2000 may include coupling protrusions 2322 protruding in opposite directions and coupling grooves 2323 recessed in opposite directions, respectively. When the coupling grooves 2323 of the pair of support members 2300 are disposed in opposite directions, a user may stack battery cell assemblies 2000 by changing the positions of the positive and negative electrodes of the battery cell assemblies 2000, if desired. However, the direction in which the coupling protrusion 2322 protrudes from the pair of support members 2300 is not limited to the above. For example, the coupling protrusions 2322 of the pair of support members 2300 may protrude in the same direction.

In example embodiments, one of the support members 2300 may include a plurality of coupling guide members. For example, as illustrated in FIG. 6, a pair of flange portions 2320 disposed on both ends of one of the support members 2300 may include coupling protrusions 2322 protruding in the same direction, respectively. As both coupling protrusions 2322 of the support member 2300 protrude in the same direction, it may be possible to prevent the support member 2300 from being turned upside down and fastened to another support member 2300 in the vertical direction (e.g., the Y-axis direction of FIG. 6).

In example embodiments, since the battery cell assembly 2000 has a coupling protrusion 2322 and a coupling groove 2323 having a shape corresponding thereto, the plurality of battery cell assemblies 2000 may be swiftly stacked and assembled in an accurate position, and erroneous assembly may be prevented in advance.

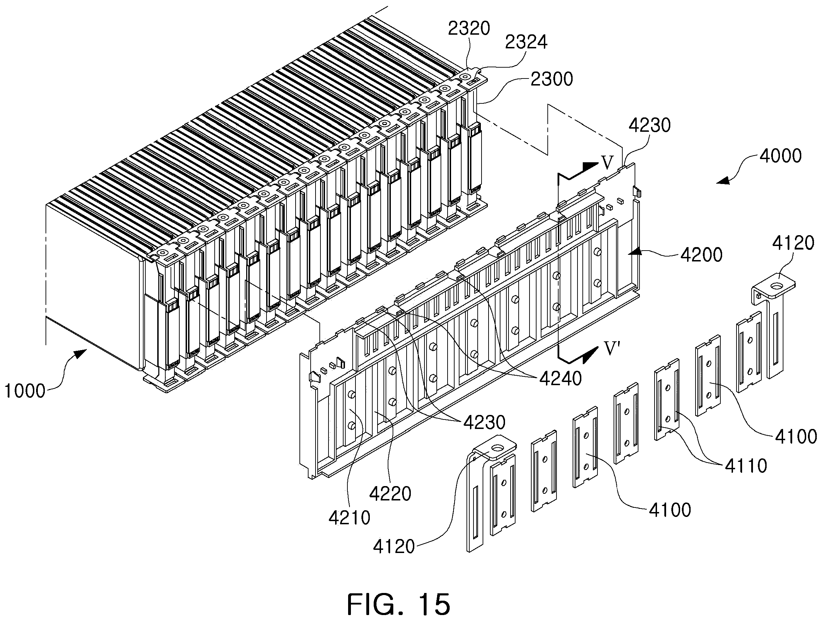

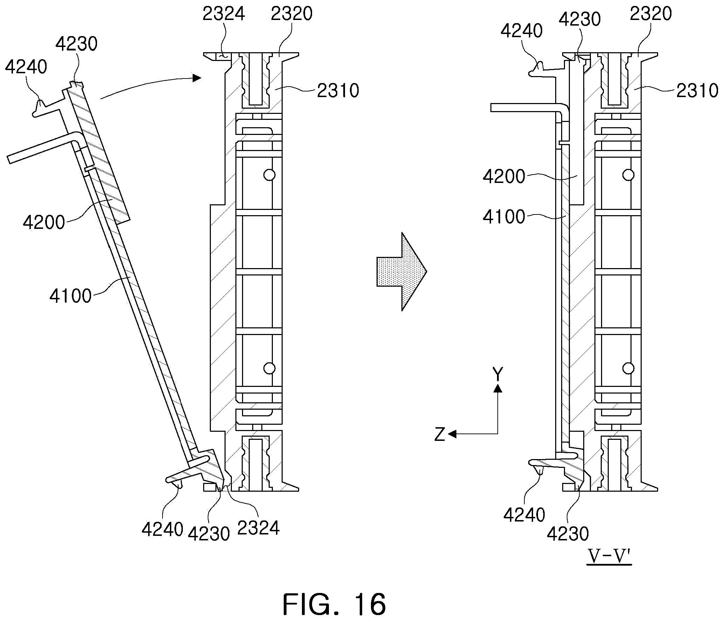

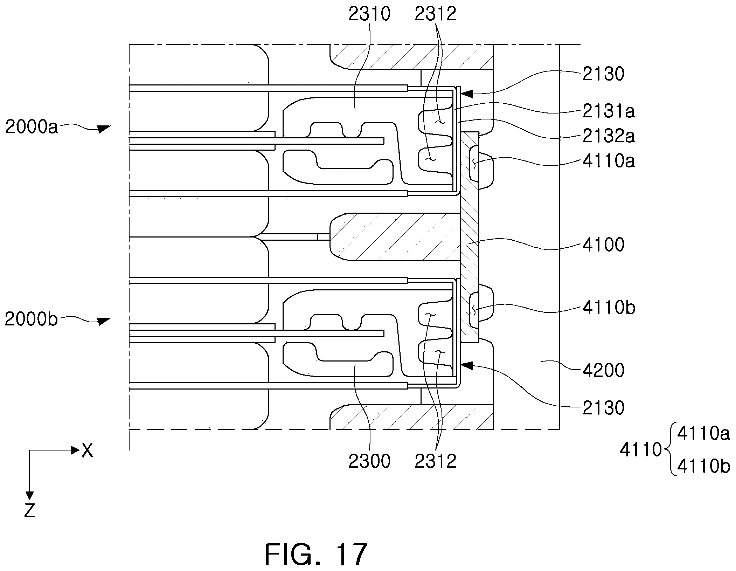

In example embodiments, individual battery cell assemblies 2000 included in the cell stack 1000 may be electrically connected to each other by a busbar assembly 4000. Hereinafter, the busbar assembly 4000 will be described in greater detail with reference to FIGS. 15 to 17. FIG. 15 is an exploded perspective diagram illustrating a busbar assembly 4000 according to an example embodiment, FIG. 16 is a diagram illustrating a state in which a busbar assembly 4000 is coupled to a cell stack 1000 according to an example embodiment, and FIG. 17 is a cross-sectional diagram illustrating a state in which a busbar assembly 4000 is coupled to a cell stack 1000 according to an example embodiment. The sub-module 200 and the components (e.g., the battery cell assembly 2000 and the busbar assembly 4000 thereof described with reference to FIGS. 15 to 17 correspond to the sub-module 200 and the components thereof described in FIGS. 1 to 14, and thus, overlapping descriptions will not be provided.

In example embodiments, the busbar assembly 4000 may include a busbar 4100 electrically connecting a battery cell assembly 2000 to another battery cell assembly 2000 and a busbar frame 4200 supporting the busbar 4100.

The busbar 4100 may be formed of a conductive material and may electrically connect the plurality of battery cell assemblies 2000 to each other. As a method to connect the busbar 4100 to the battery cell assembly 2000, various welding methods including laser welding may be applied. However, the connection method is not limited to welding, and any connection method which may electrically conduct two metallic materials may be used.

The busbar frame 4200 may support the busbar 4100 to be stably connected to the battery cell assembly 2000. The busbar 4100 may be electrically connected to the battery cell assembly 2000 while being fixed to the busbar frame 4200. For example, as illustrated in FIG. 15, a busbar frame 4200 may be disposed such that one surface may cover the cell stack 1000, and a plurality of busbars 4100 may be disposed on the other surface of the busbar frame 4200.

The busbar frame 4200 may structurally fix the busbar 4100 in an external shock or vibration situation. For example, the busbar frame 4200 may include a plastic material which may be lightweight and may have excellent mechanical strength, such as polybutylene terephthalate (PBT) and accordingly, the busbar frame 4200 may be structurally support the busbar 4100 while securing insulation.

In example embodiments, a plurality of busbars 4100 may be disposed on the busbar frame 4200 and may be arranged side by side in the stacking direction of the battery cell assembly 2000 (e.g., the Z-axis direction in FIG. 15). For example, as illustrated in FIG. 15, a plurality of busbars 4100 may be disposed side by side with a predetermined distance in the stacking direction of the battery cell assembly 2000 on a seating portion 4210 formed on the busbar frame 4200.

The busbar frame 4200 may include a separation wall 4220 disposed between one of the seating portions 4210 and another seating portion 4210 and protruding in a direction (e.g., in the X-axis direction) perpendicular to the arrangement direction of the busbar 4100. The separation wall 4220 may protrude further than the thickness (here, "thickness" may refer to a length in the X-axis direction in FIG. 15) of the busbar 4100 between two adjacent busbars 4100. The separation wall 4220 may be formed integrally with the busbar frame 4200 using the same material as that of the busbar frame 4200. Alternatively, the separation wall 4220 may include a material having a higher melting point than that of the busbar frame 4200 and may be provided as a separate member inserted into the busbar frame 4200. The separation wall 4220 may prevent two neighboring busbars 4100 from being short-circuited caused by being in contact with each other.

The busbar 4100 may be fixed to the busbar frame 4200 in various manners. For example, the busbar 4100 may be fixed to the busbar frame 4200 by a thermal fusion process or an insert injection process.

The lead tab 2130 of the battery cell assembly 2000 may be electrically connected to the busbar 4100. For example, at least a portion of the lead tab 2130 of the battery cell assembly 2000 may be disposed to oppose the busbar 4100, may be bonded to each other by a process such as laser welding, and may be electrically connected to the busbar 4100.

At least a portion of the plurality of busbars 4100 may have connection terminals 4120 used for electrical connection with an external entity, and the connection terminals 4120 may penetrate through the cover assembly 5000 and may be exposed to the outside so as to be electrically connected to an external device.

Although not illustrated in the drawing, the sub-module 200 according to the example embodiments may further include a sensing module (not illustrated) connected to the busbar assembly 4000. The sensing module (not illustrated) may include a temperature sensor or a voltage sensor, and accordingly, the state of the battery cell assembly 2000 may be sensed.

In example embodiments, the busbar frame 4200 may be coupled to the support member 2300 of the battery cell assembly 2000 and may be fixed to the cell stack 1000. For example, a first engaging groove 2324 may be disposed in the support member 2300, and a first hook 4230 inserted into the first engaging groove 2324 may be disposed in the busbar frame 4200, such that the support member 2300 and the busbar frame 4200 may be hook-coupled to each other. Referring to FIGS. 15 and 16, the flange portion 2320 on both ends of the support member 2300 may include a first engaging groove 2324 having a shape of a hole penetrating in a third direction (Y-axis direction). Correspondingly, the busbar frame 4200 may include a plurality of first hooks 4230 protruding in the third direction (Y-axis direction). The plurality of first hooks 4230 may be coupled to the first engaging grooves 2324 of at least a portion of the plurality of battery cell assemblies 2000 such that the busbar assembly 4000 may be fixed to the cell stack 1000.

Referring to FIG. 16, the busbar frame 4200 may include a pair of first hooks 4230 aligned in a third direction (Y-axis direction) and protruding in opposite directions. As illustrated in FIG. 16, a pair of first hooks 4230 may be fastened in order to the first engaging grooves 2324 of the battery cell assembly 2000 such that the busbar assembly 4000 may be easily assembled to the cell stack 1000.

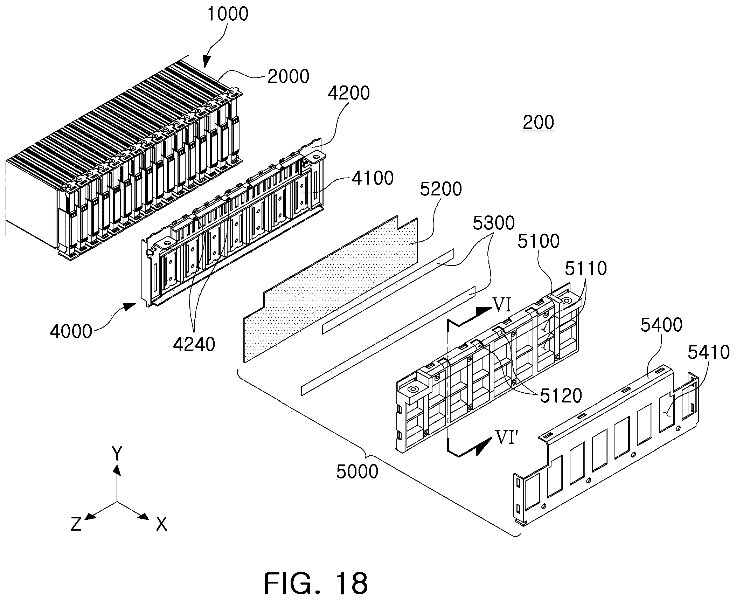

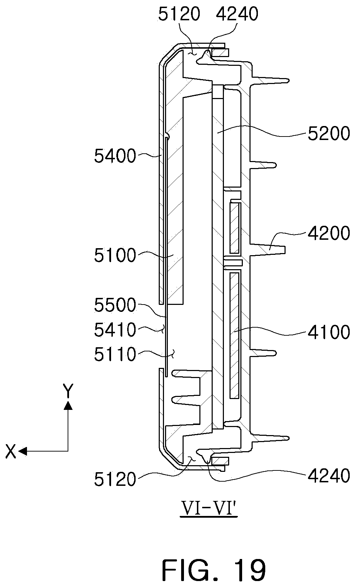

The busbar frame 4200 may further include a second hook 4240 used to fasten with the cover assembly 5000, which will be described later with reference to FIGS. 18 and 19.

Referring to FIG. 17, the lead tab 2130 of the battery cell assembly 2000 may be electrically connected to the busbar 4100. For example, the first connection portion 2131a and the second connection portion 2132a of one of the battery cell assemblies 2000 may be electrically connected to the busbar 4100 by welding. In this case, the first connection portion 2131a and the second connection portion 2132a may overlap and may be in contact with each other in a direction from the support member 2300 toward the busbar 4100, and may be disposed between the support member 2300 and the busbar 4100.

In example embodiments, the busbar 4100 may be welded to lead tabs 2130 of two neighboring battery cell assemblies 2000, respectively. For example, as illustrated in FIG. 17, a portion of the busbar 4100 may be welded to the first battery cell assembly 2000a and the other portion may be welded to the second battery cell assembly 2000b. Accordingly, the first battery cell assembly 2000a and the second battery cell assembly 2000b may be electrically connected to each other through the busbar 4100.

The first welding process and the second welding process described above with reference to FIGS. 12 and 13 may be applied to welding between the battery cell assembly 2000 and the busbar 4100. That is, in the first welding process, the first connection portion 2131a and the second connection portion 2132a may be welded to each other along the first welding region W1, and in the second welding process, the first connection portion 2131a, the second connection portion 2132a, and the busbar (4100 in FIG. 17) may be welded to each other along the second welding region W2.

To stably weld the busbar 4100 and the battery cell assembly 2000 to each other, the busbar 4100 may include one or more guide grooves 4110. For example, as illustrated in FIGS. 15 and 17, one or more guide grooves 4110 recessed toward the battery cell assembly 2000 may be formed in the surface of the busbar 4100. The guide groove 4110 may be formed by extending a recess in the busbar 4100, recessed in a second direction (X-axis direction), in a third direction (Y-axis direction) perpendicular to the second direction (X-axis direction). A welding line for welding the connection portions 2131a and 2132a of the two lead tabs 2131 and 2132 and the busbar 4100 may be formed along the guide groove 4110.

The busbar 4100 may include a plurality of guide grooves 4110. Each guide groove 4110 may be disposed to oppose the support member 2300 of the different battery cell assembly 2000. For example, as illustrated in FIG. 17, the third guide groove 4110a may be disposed to oppose the support member 2300 of the first battery cell assembly 2000a in the second direction (X-axis direction), and the fourth guide groove 4110b may be disposed to oppose the support member 2300 of the second battery cell assembly 2000b in the second direction (X-axis direction).

The guide groove 4110 of the busbar 4100 may be disposed to oppose the guide groove 2312 of the battery cell assembly 2000. For example, the third guide groove 4110a of the busbar 4100 may be disposed to oppose at least one of the guide grooves 2312 of the first battery cell assembly 2000a in the second direction (X-axis direction), and the fourth guide groove 4110b may be disposed to oppose at least one of the guide grooves 2312 of the second battery cell assembly 2000b in the second direction (X-axis direction). Referring to FIG. 17, the guide groove 4110 of the busbar 4100 may oppose a guide groove disposed more adjacent toward another battery cell assembly (e.g., 2000b) from one of the battery cell assemblies (e.g., 2000a) among the two guide grooves 2312 each of the two neighboring battery cell assemblies 2000a and 2000b.

As the guide groove 4110 of the busbar 4100 and the guide groove 2312 of the battery cell assembly 2000 are disposed side by side, welding between the busbar 4100 and the lead tab 2130 may be performed safely.

In example embodiments, the sub-module 200 may include a cover assembly 5000 covering the busbar frame 4200. Hereinafter, the cover assembly 5000 will be described in greater detail with reference to FIGS. 18 and 19. FIG. 18 is an exploded perspective diagram illustrating a cover assembly 5000 according to an example embodiment, and FIG. 19 is a cross-sectional diagram taken along line VI-VI' in FIG. 18 in a state in which the cover assembly 5000 is coupled to the busbar assembly 4000. Since the sub-module 200 and the components thereof described with reference to FIGS. 18 to 19 correspond to the sub-module 200 and the components thereof described with reference to FIGS. 1 to 17, overlapping descriptions will not be provided.

In example embodiments, the cover assembly 5000 may include a cover frame 5100 and a heat insulating member 2210 fixed to the cover frame 5100.

The cover frame 5100 may be combined with the busbar assembly 4000 and may physically and electrically protect the busbar 4100 from the external environment of the sub-module 200. For example, the cover frame 5100 may cover the busbar 4100 and may prevent the busbar 4100 from being unintentionally conducted with an external object of the sub-module 200.

The cover frame 5100 may include a plastic material which may be lightweight and may have excellent mechanical strength, such as polybutylene terephthalate (PBT) or modified polyphenylene oxide (MPPO). Accordingly, the busbar assembly 4000 may be protected from external impact while securing insulation.

The cover assembly 5000 may include a side cover 5400 coupled to the external side of the cover frame 5100. The side cover 5400 may be disposed on the outermost sides of the sub-module 200 and may protect the sub-module 200 from external impact.

For example, the side cover 5400 may include a material having higher mechanical strength than that of the cover frame 5100.

For example, side cover 5400 may include a metal material (e.g., stainless steel).

The cover frame 5100 and the side cover 5400 may be hook-coupled to each other.

Each of the cover frame 5100 and the side cover 5400 may include one or more venting holes 5110 and 5410. For example, the cover frame 5100 may include a plurality of first venting holes 5110 penetrating in a direction opposing the busbar 4100 (X-axis direction). The side cover 5400 may include a second venting hole 5410 opposing the first venting hole 5110. Gas generated in the cell stack 1000 may be discharged to the outside of the sub-module 200 through the first venting hole 5110 of the cover frame 5100 and the second venting hole 5410 of the side cover 5400.

A heat insulating member 5200 may be disposed between the cover frame 5100 and the busbar assembly 4000. In the description below, to differentiate from the heat insulating member 2210 of the battery cell assembly 2000, the heat insulating member 5200 of the cover assembly 5000 may be referred to as a third heat insulating member 5200.

The third heat insulating member 5200 may prevent or block spreading of flame or high-temperature thermal energy to another adjacent sub-module 200 when an event occurs in the sub-module 200. Also, the third heat insulating member 5200 may reduce thermal energy of high-temperature gas or dust ejected from the sub-module 200. Also, as the third heat insulating member 5200 is disposed, gas, flame, and dust generated by thermal runaway of another adjacent sub-module 200 may be prevented from penetrating into the sub-module 200. To this end, the third heat insulating member 5200 may include a material having at least one of flame retardancy, heat resistance, heat insulation, and insulation. For example, the third heat insulating member 5200 may include ceramic wool for preventing spreading of heat and/or flame. However, the material of the third heat insulating member 5200 is not limited thereto, and may be formed of any material which may prevent heat or flames from spreading to other adjacent sub-modules 200 or battery cells 2100.

The third heat insulating member 5200 may be fixed to the cover frame 5100. For example, as illustrated in FIG. 18, an adhesive member 5300 may be disposed between the third heat insulating member 5200 and the cover frame 5100, and the third heat insulating member 5200 may be adhesively fixed to the cover frame 5100 by the adhesive member 5300. For example, the adhesive member 5300 may be a double-sided tape or a binder. However, an example embodiment thereof is not limited thereto, and instead of the adhesive member 5300, a fastening member (not illustrated) fastening the third heat insulating member 5200 and the cover frame 5100 to each other may be disposed.

In example embodiments, the third heat insulating member 5200 may be configured to cover the first venting hole 5110 and the second venting hole 5410. The third heat insulating member 5200 may prevent foreign substances outside the sub-module 200 or gas and particles emitted from other sub-modules 200 from entering the sub-module 200 through the venting holes 5110 and 5410.

In the event of a thermal runaway in the sub-module 200, at least a portion of the third heat insulating member 5200 may be torn to allow gas generated from the cell stack 1000 to pass therethrough. Alternatively, the third heat insulating member 5200 may include a material which may allow gas to pass therethrough, and may allow gas generated from the cell stack 1000 to pass through without damaging the member.

In example embodiments, the cover assembly 5000 may be coupled to the busbar assembly 4000 and may be fixed to the cell stack 1000. For example, a second engaging groove 5120 may be disposed on the cover frame 5100, and a second hook 4240 inserted into the second engaging groove 5120 may be disposed on the busbar frame 4200, such that the cover frame 5100 and the busbar frame 4200 may be hooked to each other. Referring to FIG. 18, the cover frame 5100 may include a second engaging groove 5120 having a shape of a hole penetrating in a third direction (Y-axis direction). Correspondingly, the busbar frame 4200 may include a plurality of second hooks 4240 protruding in a third direction (Y-axis direction). The plurality of second hooks 4240 may be coupled to at least a portion of the second engaging grooves 5120 such that the cover assembly 5000 may be fixed to the busbar assembly 4000.

Referring to the cross-sectional diagram in FIG. 19, the busbar frame 4200 may include a pair of second hooks 4240 aligned in a third direction (Y-axis direction) and protruding in opposite directions. Accordingly, by fastening the pair of second hooks 4240 in order to the second engaging groove 5120 of the cover assembly 5000, the cover assembly 5000 may be easily assembled to the busbar assembly 4000.

In example embodiments, the cover assembly 5000 may further include a shielding member 5500 disposed between the cover frame 5100 and the side cover 5400 and blocking the venting hole. As illustrated in FIG. 19, the shielding member 5500 may be provided as a thin film or a sheet, and may primarily block gas or particles which may enter from the outside of the sub-module 200. The shielding member 5500 may include a material which may be lightweight and may have excellent impact resistance, heat resistance, or electrical insulation, and may include, for example, a polycarbonate sheet. The shielding member 5500 may block high-temperature heat generated in the sub-module 200 from spreading to another adjacent battery module together with the second heat insulating member disposed between the cover frame 5100 and the busbar frame.

In the event of thermal runaway in the sub-module 200, at least a portion of the shielding member 5500 may be torn such that gas ejected from the sub-module 200 toward the venting hole may properly penetrate therethrough.

However, the coupling structure in FIG. 19 is merely an example, and the cover assembly 5000 may be combined with other structures (e.g., battery cell assembly) of the sub-module 200 and may cover the busbar assembly 4000.

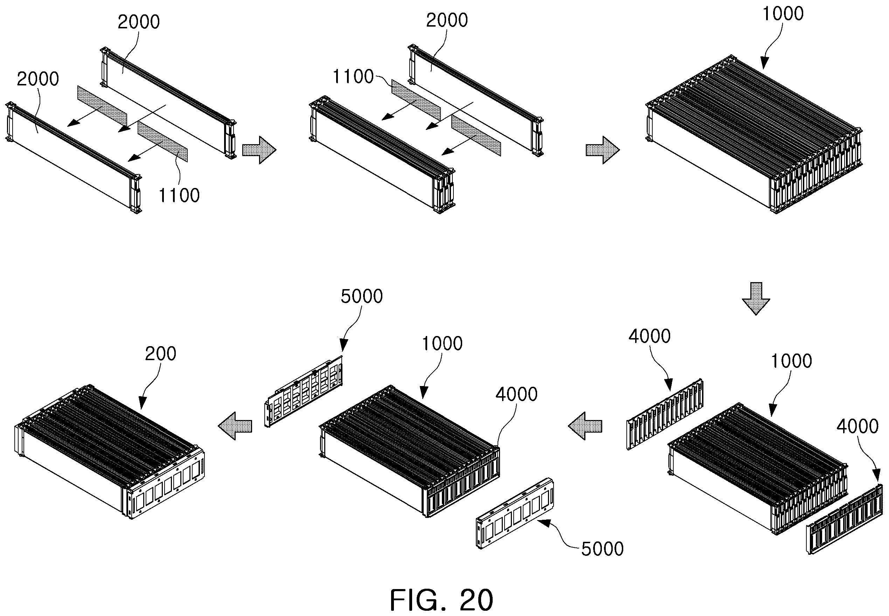

Hereinafter, an assembly sequence of the sub-module 200 according to the example embodiments will be described with reference to FIG. 20. FIG. 20 is a diagram illustrating an assembly sequence of a sub-module 200 according to an example embodiment. Since the sub-module 200 described with reference to FIG. 20 corresponds to the sub-module 200 described with reference to FIGS. 1 to 19, overlapping descriptions will not be provided.

As illustrated in the upper left side in FIG. 20, an assembly unit of the sub-module 200 may be the battery cell assembly 2000. An appropriate number of battery cell assemblies 2000 suitable for a voltage output value required for the sub-module 200 may be prepared.

As illustrated in the upper central side in FIG. 20, a plurality of battery cell assemblies 2000 may be stacked and assembled. In this case, the adhesive member 1100 may be disposed between the battery cell assemblies 2000 to fix the battery cell assemblies 2000 to each other. Also, using the coupling protrusion (e.g., 2322 in FIG. 9) and the coupling groove (e.g., 2323 in FIG. 9) of the battery cell assembly 2000, the stacking and assembling may be performed swiftly and accurately.

As illustrated in the upper right corner in FIG. 20, the cell stack 1000 may be formed by stacking the entirety of battery cell assemblies 2000. In the cell stack 1000, lead tabs (e.g., 2130 in FIG. 6) may be exposed in a direction perpendicular to the stacking direction, and the lead tabs and the busbar assembly 4000 may be electrically connected to each other.

As illustrated in the lower right side in FIG. 20, the battery cell assemblies 2000 may be electrically connected to each other by coupling the battery cell assembly 2000 to the busbar assembly 4000.

As illustrated in the lower central side in FIG. 20, the cover assembly 5000 and the busbar assembly 4000 may be coupled to each other. The cover assembly 5000 may cover the busbar assembly 4000 and may protect the busbar assembly 4000.

After completing the coupling of the cover assembly 5000, the sub-module 200 may be completed as illustrated in the lower left side in FIG. 20.

The sub-module 200 according to the example embodiments may determine the number of battery cell assemblies 2000 according to design requirements, and may change only the sizes of the busbar assembly 4000 and the cover assembly 5000 in response thereto, such that the sub-modules 200 of various sizes and the battery modules (e.g., 100 in FIGS. 2 and 3) including the same may be swiftly manufactured.

In the sub-module 200 according to the example embodiments, a member such as a housing or a case covering an outer periphery of the cell stack 1000 may not be provided, and the battery cells 2100 of the cell stack 1000 may be directly exposed to the outside of the sub-module 200. Accordingly, the heat dissipation efficiency of the sub-module 200 may be greatly increased. Also, as a housing or case is not provided, the weight of the sub-module 200 may be reduced, and energy density may be further increased while maintaining the same volume.

Since each of the battery cell assembly 2000, the busbar assembly 4000, and the cover assembly 5000 included in the sub-module 200 may have a simplified assembly structure, separate fastening components may be significantly reduced and assembly efficiency and production speed may be increased. Also, by adjusting the number of battery cell assemblies 2000, which are assembly units of the sub-module 200, the sub-module 200 which may meet various requirements may be swiftly provided.

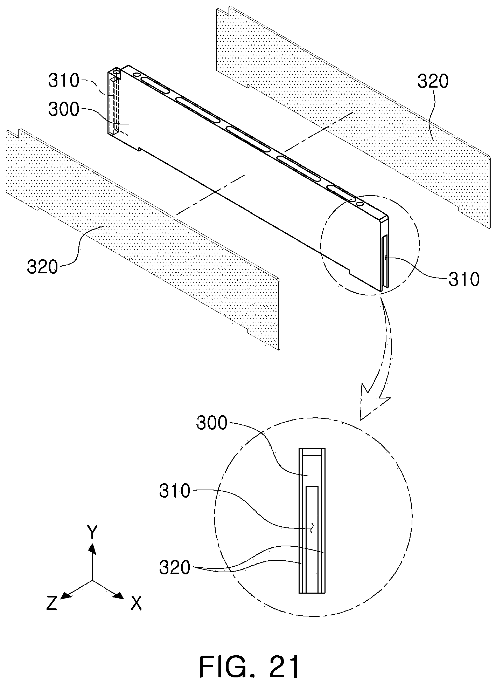

FIG. 21 is a perspective diagram illustrating an end plate 300 included in a battery module 100 according to an example embodiment. The end plate described with reference to FIG. 21 corresponds to the end plate 300 described with reference to FIGS. 2 and 3, and overlapping descriptions may not be provided.

Referring to FIG. 21, the end plate 300 may be a partition-shaped member having insertion grooves 310 into which guide blocks (e.g., 721 in FIG. 2) may be inserted into both ends thereof. However, the specific shape of the end plate 300 is not limited to the illustrated example.

The end plate 300 may oppose a sub-module (e.g., 200 in FIGS. 1 to 20) in a first direction (Z-axis direction), and may have insertion grooves 310 on both ends in the second direction (X-axis direction). The insertion groove 310 may have a shape of a groove recessed in the second direction in an end of the end plate 300.

A contact protrusion (not illustrated) may be disposed in the insertion groove 310. The contact protrusion (not illustrated) may be in contact with the guide block 721 and may increase coupling strength between the guide block 721 and the insertion groove 310. For example, the contact protrusion (not illustrated) may be provided in the form of protrusions protruding from surfaces of the insertion groove 310 opposing each other. A plurality of contact protrusions (not illustrated) may be spaced apart from each other in a third direction (e.g., Y-axis direction). The contact protrusion (not illustrated) may be configured to press the guide block 721 inserted into the insertion groove 310, and accordingly, coupling strength between the end plate 300 and the guide block 721 may be further increased. However, the contact protrusion (not illustrated) may not be provided. For example, the insertion groove 310 may be configured to have a flat surface without the contact protrusion (not illustrated) .

The end plate 300 may be disposed between two neighboring sub-modules (200 in FIGS. 1 to 20) and may prevent or block heat transfer between the sub-modules (200 in FIGS. 1 to 20). To increase the heat blocking rate, a heat insulating member 320 may be disposed on at least a portion of the end plate 300. For example, as illustrated in FIG. 21, the heat insulating members 320 may be disposed on both surfaces of the end plate 300.

The heat insulating member 320 may be disposed between the end plate 300 and the sub-module (200 in FIGS. 1 to 20). For example, one surface of the heat insulating member 320 may oppose the end plate 300, and the other surface opposite to one surface may oppose the sub-module (200 in FIGS. 1 to 20).

The heat insulating member 320 may be adhered to the end plate 300 by an adhesive material such as a binder. However, the coupling method between the heat insulating member 320 and the end plate 300 is not limited to the above example, and any method to fix both components to each other may be used.

The heat insulating member 320 may include a material having at least one of flame retardancy, heat resistance, heat insulation, and insulation. For example, heat resistance may refer to properties in which a material does not melt and does not change shape even at a temperature of 600 degrees Celsius or more, and heat insulation may refer to properties in which thermal conductivity is 1.0 W/mK or less. For example, the heat insulating member 320 may may include at least a portion of mica, silicate, graphite, alumina, ceramic wool, and aerogel for preventing heat and/or flame spreading. However, the material of the heat insulating member 320 is not limited thereto, and any material which may maintain the shape thereof in the event of thermal runaway in a cell stack (e.g., 1000 in FIG. 3) and may prevent heat or flames spreading to other adjacent cell stacks. However, in the battery module (e.g., 100 in FIGS. 1 to 3) of the example embodiments, the above-described heat insulating member 320 may not be provided.

The end plate 300 may be used as a fastening region in which the battery module (100 in FIGS. 1 to 3) is coupled to the pack housing (700 in FIGS. 20 of 200), and may blocking heat transfer between the sub-modules (200 in FIGS. 1 to 20).

Gas or particles emitted from the sub-module (200 in FIGS. 1 to 20) may escape through a gap between the end plate 300 and the support frame 720. The guide block (721 in FIG. 2) may block such a gap by being combined with the end plate 300, and may block gas or particles from escaping through a the gap between the end plate 300 and the support frame (720 in FIG. 2).

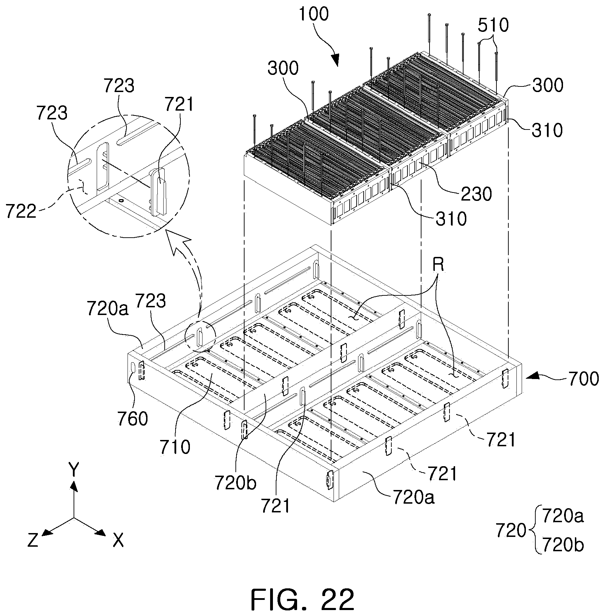

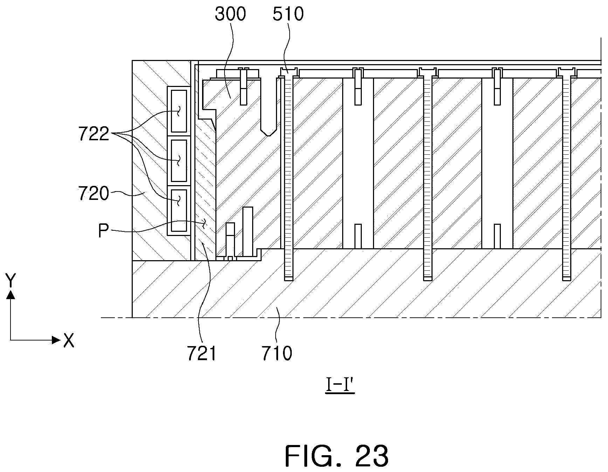

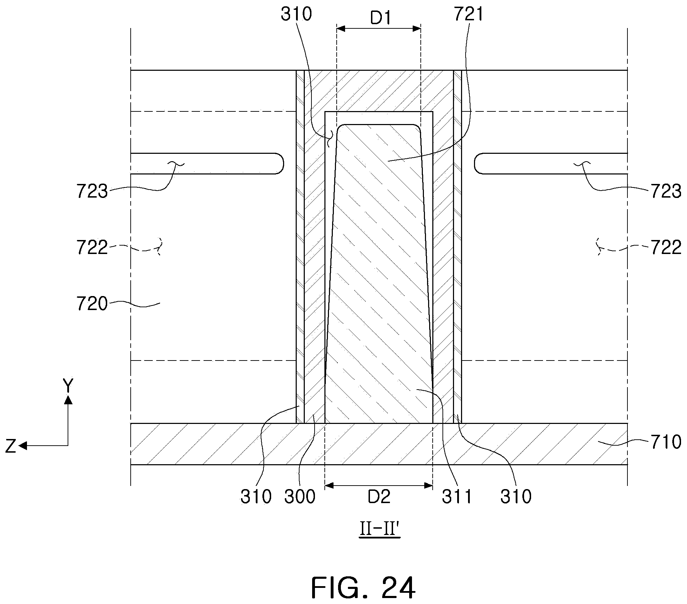

FIG. 22 is a diagram illustrating accommodation of a battery module 100 in a battery pack 10 according to an example embodiment. FIG. 23 is a cross-sectional diagram taken along line I-I' in FIG. 2, and FIG. 24 is a cross-sectional diagram taken along line II-II' in FIG. 2. Since the battery module 100 described with reference to FIGS. 22 to 24 and the battery pack 10 including the same correspond to the battery module 100 and the battery pack 10 described with reference to FIGS. 1 to 21, overlapping description may not be provided.

The battery module 100 may be seated on an internal space R of the pack housing 700. For example, the pack housing 700 may have one or more internal spaces R partitioned by the support frame 720, and one or more battery modules 100 may be accommodated in each internal space R.

The battery module 100 may be coupled with the lower frame 710 of the pack housing 700. For example, the battery module 100 may include sub-modules 200 and end plates 300 alternately stacked in a first direction (e.g., Z-axis direction), and the first fastening member 510 may penetrate the end plate 300 in a third direction (e.g., Y-axis direction) perpendicular to the first direction (Z-axis direction) and may be fastened to the lower frame 710, such that the battery module 100 may be be fixed to the lower frame 710. The battery module 100 seated on the lower frame 710 may oppose the support frame 720 in a second direction (e.g., X-axis direction) perpendicular to the first direction (Z-axis direction).

A venting hole 230 may be disposed on a surface of the battery module 100 opposing the support frame 720.

A venting passage 722 may be formed in the support frame 720. The venting passage 722 may be a flow path through which gas or fine particles may flow. For example, the venting passage 722 may be a tubular flow path extending in a first direction (Z-axis direction) in the side frame 720a or the partition frame 720b. The venting passage 722 may have a single-layer or multilayer structure in the height direction of the support frame 720 (e.g., the Y-axis direction in FIG. 22). For example, referring to the cross-sectional diagram in FIG. 23, the venting passage 722 may be divided into three layers. In this case, each layer may be configured to communicate with each other or not to communicate with each other. However, the specific shape or path of the venting passage 722 is not limited to the above example, and may be provided in any shape as long as the flow path extends from the internal space R of the pack housing 700 to the outlet 760.

Referring to FIG. 22, when the venting passage 722 is formed in the support frame 720, the venting passage 722 may communicate with the internal space R of the battery pack 10 through the opening 723. The opening 723 may oppose the venting hole 230 of the battery module 100. For example, the venting hole 230 may oppose the opening 723 disposed on the support frame 720 in the second direction (X-axis direction). Accordingly, gas or particles discharged from the venting hole 230 may flow into the venting passage 722 through the opening 723. Although not illustrated in the drawing, a flame prevention member (not illustrated) for reducing flame may be disposed in the opening 723. For example, the flame prevention member (not illustrated) may include one or more mesh members. The high-temperature gas or flame emitted from the venting hole 230 may decrease in temperature while passing through a flame prevention member (not illustrated), and accordingly, the size or intensity of flame may be reduced or flame may be removed. Gas or particles flowing into the venting passage 722 may flow along the venting passage 722, such that thermal energy or kinetic energy may be gradually lowered, and may be safely discharged to the outside of the battery pack 10 through the outlet 760 of the pack housing 700.

A guide block 721 inserted into the battery module 100 is disposed in the pack housing 700 such that the battery module 100 may be assembled in an accurate position. For example, a plurality of guide blocks 721 protruding toward the internal space R of the battery pack 10 are disposed on the side frame 720a and the partition frame 720b of the pack housing 700, respectively, and in the battery module 100, an insertion groove 310 into which the guide block 721 is inserted is disposed.

The insertion groove 310 is formed on the end plate 300 of the battery module 100. For example, insertion grooves 310 recessed in the second direction (X-axis direction) may be disposed on both ends of the end plate 300 in the second direction (X-axis direction). To correspond to the number of guide blocks 721, a plurality of insertion grooves 310 may be spaced apart from each other in the first direction (Z-axis direction).

The insertion groove 310 and the venting hole 230 may be arranged in the first direction (Z-axis direction) on at least one side of the battery module 100. For example, as illustrated in FIG. 22, a venting hole 230 may be disposed between a plurality of insertion grooves 310 spaced apart from each other in the first direction (Z-axis direction).

The guide block 721 may guide the battery module 100 to be assembled in an accurate position. For example, in the process of seating the battery module 100 in the pack housing 700, a manufacturer may insert the guide block 721 into the insertion groove 310 to seat the battery module 100 in an accurate position.

A gap may be present between the battery module 100 accommodated in the internal space R of the pack housing 700 and the support frame 720. For example, the length of the battery module 100 in the second direction (X-axis direction) may be configured to be smaller than the width of the internal space (R) of the pack housing 700 in the second direction (X-axis direction) such that the battery module 100 may be safely inserted. Alternatively, a gap may be present between the battery module 100 and the support frame 720 due to manufacturing tolerances. The guide block 721 is inserted into the end plate 300 and may cover the gap. Accordingly, a partition structure extending from the end plate 300 to the support frame 720 may be formed. Hereinafter, the guide block 721 will be described in greater detail.

The guide block 721 may protrude from the support frame 720 toward the internal space R. Alternatively, the guide block 721 may protrude toward the battery module 100 from the support frame 720. For example, when the side frame 720a of the support frame 720 extends in the first direction (Z-axis direction) from the edge of the lower frame 710, the guide block 721 may protrude from the side frame 720a toward the internal space R in a second direction (X-axis direction) perpendicular to the first direction.

The plurality of guide blocks 721 may be spaced apart from the support frame 720 in the first direction (Z-axis direction). Here, the first direction (Z-axis direction) may be the same as the direction in which the battery cell assemblies 2000 included in the battery module 100 are stacked. An opening 723 of the support frame 720 may be disposed between the plurality of guide blocks 721. For example, as illustrated in FIG. 22, the guide block 721 and the opening 723 may be alternately disposed in the first direction (Z-axis direction) on the surface opposing the internal space R in the support frame 720.

The number of openings 723 disposed between two guide blocks 721 may vary. FIG. 22 illustrates a state in which a single opening 723 is disposed between two neighboring guide blocks 721, but this is merely an example, and a plurality of openings 723 may be disposed between two neighboring guide blocks 721.

The guide blocks 721 may be respectively disposed on two support frames 720 opposing each other. For example, guide blocks 721 protruding in opposite directions may be disposed on the side frame 720a and the partition frame 720b. The plurality of guide blocks 721 spaced apart from each other in the first direction (Z-axis direction) in the side frame 720a and the plurality of guide blocks 721 spaced apart from each other in the first direction in the partition frame 720b in the first direction may oppose each other in the second direction (X-axis direction) perpendicular to the first direction (Z-axis direction). That is, a plurality of the pair of guide blocks 721 opposing each other in the second direction (X-axis direction) may be spaced apart from each other in the first direction (Z-axis direction) in the pack housing 700. The pair of guide blocks 721 opposing each other in the second direction (X-axis direction) may be inserted into opposite surfaces of the battery module 100.

The guide block 721 may be integrally formed with the support frame 720. Alternatively, the guide block 721 may be formed as a separate member and may be coupled to the support frame 720. When the guide block 721 is provided as a separate member, the guide block 721 may be welded and coupled to the support frame 720. In this case, various welding methods including laser welding may be applied.

The guide block 721 is inserted into the end plate 300 of the battery module 100.

Referring to FIG. 23, a spacing P may be formed between the end plate 300 fastened to the lower frame 710 and the support frame 720. The guide block 721 may be inserted into the end plate 300 and may fill at least a portion of the spacing P. The guide block 721 may block gas or particles flowing into the spacing P.

The guide block 721 is inserted into the end plate 300 and form a partition structure extending from the end plate 300 to the support frame 720. By the partition structure, gas or particles emitted from one sub-module 200 may be prevented from flowing to another sub-module 200 through the spacing P between the end plate 300 and the support frame 720.

Since at least a portion of the spacing P between the end plate 300 and the support frame 720 is filled by the guide block 721, gas or particles emitted from one sub-module 200 may mostly flow into the venting passage 722 of the frame 720.

To allow the guide block 721 to be easily inserted into the end plate 300, at least a portion of surfaces of the guide block 721 may be configured as inclined surfaces. For example, referring to FIG. 24, the guide block 721 disposed between two openings 723 spaced apart from each other in the first direction (Z-axis direction) may be configured to have different widths on both ends in the third direction (Y-axis direction) perpendicular to the first direction (Z-axis direction). By including the structure, at least a portion of surfaces of the guide block 721 may be configured to be inclined with respect to the third direction (Y-axis direction). Here, "width" may refer to a length in the first direction (Z-axis direction). Here, the first direction (Z-axis direction) may be the same as the direction in which battery cell assemblies (e.g., 2000 in FIG. 3) included in the battery module (e.g., 100 in FIGS. 1 to 3) are stacked. Also, the third direction (Y-axis direction) may be a direction perpendicular to both the first direction (Z-axis direction) and the second direction (X-axis direction) in which the end plate 300 and the support frame 720 oppose each other.

In the structure in which the battery module (100 in FIGS. 2 and 3) is seated on the lower frame 710, the guide block 721 may be configured such that the width of the upper (e.g., Y-axis positive direction) end portion thereof may be narrower than the width of the lower (e.g., Y-axis negative direction) end portion to be easily inserted into the insertion groove 310 of the end plate 300. The guide block 721 may easily enter the insertion groove 310 of the end plate 300 through a relatively narrow upper end. After the guide block 721 enters the insertion groove 310, the battery module (100 in FIGS. 2 and 3) may be seated in an accurate position while descending along the inclined surface of the guide block 721.

However, the specific shape of the guide block 721 is not limited to the above. For example, the guide block 721 may have a rectangular cross-section without having an inclined surface. The guide block 721 may be configured in any shape as long as the guide block 721 may be inserted into the insertion groove 310.

As the guide block 721 is inserted into the end plate 300, a partition structure for blocking gas or particles from escaping through a gap between the end plate 300 and the support frame 720 may be formed. Accordingly, gas or particles generated in a portion of the battery module (100 in FIGS. 2 and 3) may mostly flow into the venting passage 722 of the support frame 720.

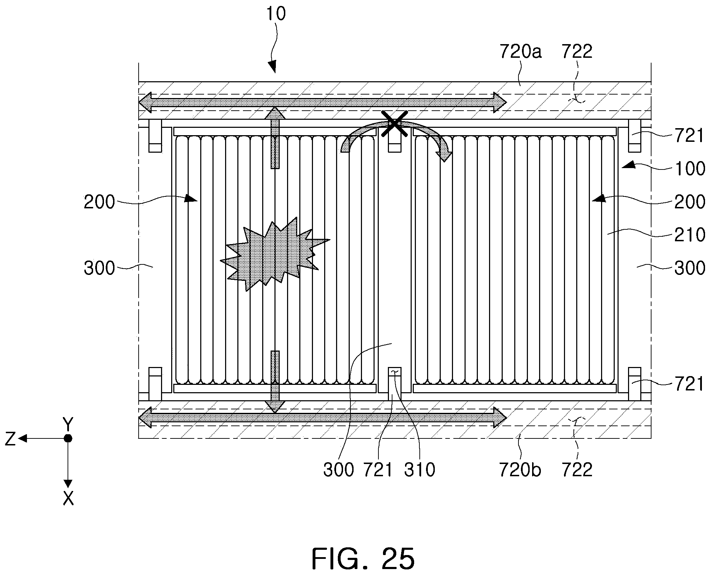

Hereinafter, the flow of gas or particles in the battery pack 10 formed by the partition structure will be described with reference to FIG. 25.

FIG. 25 is a diagram illustrating an isolation structure of a battery pack according to an example embodiment. Since the battery module 100 described with reference to FIG. 25 and the battery pack 10 including the same correspond to the battery module 100 and the battery pack 10 described above in FIGS. 1 to 24, overlapping descriptions will not be provided.

In the event of thermal runaway, gas or combustion particles generated in the sub-module 200 may be emitted toward the pack housing 700. Gas or combustion particles emitted from the sub-module 200 may flow into the venting passage 722 formed in the support frame 720, may flow along the venting passage 722 may be discharged externally of the battery pack 10 through the outlet 760.

The venting passage 722 may be formed along the length direction (e.g., Z-axis direction) of the support frame 720. For example, as illustrated in FIG. 25, a venting passage 722 extending in a first direction (Z-axis direction) may be formed in the side frame 720a and the partition frame 720b. For example, the venting passage 722 may be provided in a hollow shape penetrating the support frame 720 in a first direction (Z-axis direction), and may have a single layer structure or a multilayer structure in the second direction (e.g., the Y-axis direction).

The venting passage 722 may communicate with the internal space R of the battery pack 10 through the opening of the support frame 720 (e.g., 723 in FIGS. 2 and 22). The opening 723 may oppose the sub-module 200. When the sub-module 200 and the end plate 300 of the battery module 100 are alternately arranged in the first direction (Z-axis direction), the opening (723 in FIGS. 2 and 22) may be disposed on a surface of the support frame 720 opposing the sub-module 200 in the second direction (X-axis direction). Gas or combustion particles ejected from the sub-module 200 may flow into the venting passage 722 through the opening (723 in FIGS. 2 and 22).

A predetermined spacing (e.g., P in FIG. 23) may be formed between the battery module 100 and the support frame 720, and gas or particles generated in one of the sub-modules 200 may flow along this spacing. The guide block 721 may partition across the spacing (P in FIG. 23). For example, the guide block 721 may protrude from the support frame 720 toward the battery module 100 and may be inserted into the end plate 300 of the battery module 100. An insertion groove 310 into which the guide block 721 may be inserted may be disposed on the end plate 300. The insertion groove 310 of the end plate 300 and the guide block 721 may form a uneven coupling structure.

The guide block 721 may fill the gap between the end plate 300 and the support frame 720 such that gases or particles generated in one sub-module 200 may be prevented from flowing to another adjacent sub-module 200. Accordingly, as illustrated in FIG. 25, gas or particles generated in one sub-module 200 may mostly flow into the venting passage 722 of the support frame 720, and may not flow over to other neighboring sub-modules 200.

Due to the partition structure formed by the guide block 721 and the end plate 300, the effect of gas or particles generated in one sub-module 200, flowing into other adjacent sub-modules 200 and affecting the sub-modules may be reduced. Accordingly, chain thermal runaway or ignition from occurring in the battery module 100 may be prevented.

Also, since gas or particles generated in the battery module 100 may not stay in the pack housing 700 for a long time and may flow out swiftly through the venting passage 722, an excessive increase in internal temperature of the battery pack 10 may be prevented.

Also, since the battery module 100 may be swiftly disposed in an accurate position through the guide block 721, manufacturing efficiency of the battery pack 10 may be increased.

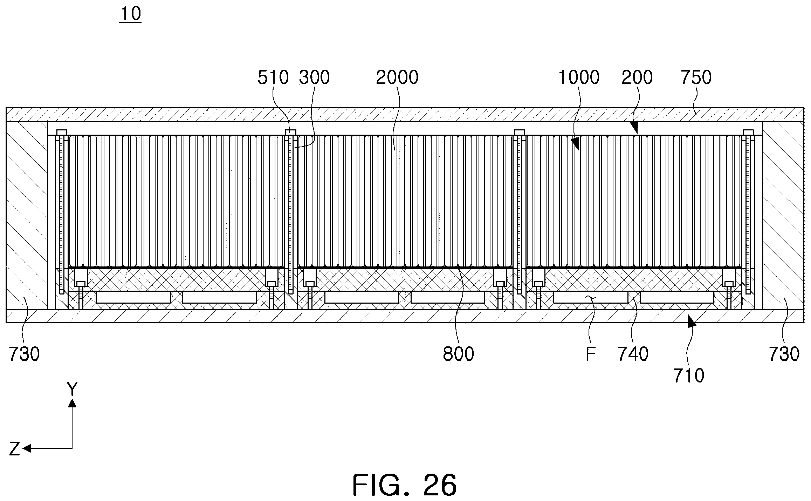

Thermal energy generated in the battery module 100 may be emitted toward the pack housing 700. Hereinafter, a heat dissipation configuration of the battery pack 10 will be described with reference to FIG. 26.

FIG. 26 is a cross-sectional diagram taken along line III-III' in FIG. 2. The battery module 100 and the battery pack 10 described with reference to FIG. 26 correspond to the battery module 100 and the battery pack 10 described with reference to FIGS. 1 to 25, and overlapping descriptions may not be provided.

In example embodiments, the battery module 100 may be fastened and fixed to the lower frame 710. For example, the battery module 100 may include a plurality of sub-modules 200 and a plurality of end plates 300 alternately disposed in a first direction (Z-axis direction), and at least one of the plurality of end plates 300 may be fastened to the lower frame 710. To increase fastening strength between the end plate 300 and the lower frame 710, the battery pack 10 further may include first fastening members 510 fastened to the end plate 300 and the lower frame 710. For example, as illustrated in FIG. 26, the first fastening member 510 may penetrate through the end plate 300 in the third direction (Y-axis direction) perpendicular to the first direction (Z-axis direction) and may be fastened to the lower frame 710.

The cell stack 1000 of the sub-module 200 may oppose the lower frame 710 in the third direction. Thermal energy generated in the cell stack 1000 may flow out of the battery pack 10 through the lower frame 710.

A heat dissipation member 800 may be disposed between the cell stack 1000 and the lower frame 710 such that heat may be smoothly transferred in a direction toward the lower frame 710. For example, one surface of the heat dissipation member 800 may be in contact with the cell stack 1000 and the other surface opposite to the one surface may be in contact with the lower frame 710. The heat dissipation member 800 may be provided as a thermal adhesive. The heat dissipation member 800 may fill a space between the cell stack 1000 and the lower frame 710 such that heat transfer by conduction may be actively performed.

In example embodiments, the heat dissipation member 800 may not be provided. For example, at least a portion of the cell stack 1000 may be disposed to be in direct contact with the lower frame 710. In this case, in the battery cell (e.g., 2100 in FIG. 7) included in the cell stack 1000, the folded portion (2113 in FIG. 7) may be in contact with the lower frame 710. Accordingly, a heat transfer path by conduction may be formed between the cell stack 1000 and the lower frame 710.

To further increase the temperature gradient between the cell stack 1000 and the lower frame 710, the lower frame 710 of the battery pack 10 may further include a cooling member 740. For example, as illustrated in FIG. 26, the lower frame 710 may include a cooling member 740 opposing the cell stack 1000 in a third direction (Y-axis direction).

A flow path F through which cooling fluid may flow may be disposed in the cooling member 740. For example, the cooling fluid may include air, cooling water or a refrigerant. The cooling fluid may absorb thermal energy generated from the battery module 100 while flowing in the flow path F of the cooling member 740.

The cooling member 740 may be disposed in the lower frame 710 or may be disposed on an outer surface of the lower frame 710. For example, the cooling member 740 may be disposed on a surface of the lower frame 710 toward the battery module 100 such that at least a portion of the cooling member 740 may be in contact with the battery module 100.

The cooling member 740 may be in contact with the heat dissipation member 800 of the battery module 100. For example, as illustrated in FIG. 26, one side of the heat dissipation member 800 may be disposed to oppose the cell stack 1000 (or the battery cell 2100 included in the cell stack 1000) in the third direction (Y-axis direction), and the other surface of the heat dissipation member 800 may be disposed to oppose the cooling member 740 in the third direction (Y-axis direction).

As the cooling member 740 is disposed, a temperature gradient may further increase from the battery module 100 toward the lower frame 710, and heat transfer may occur actively.

In the battery pack 10 according to the example embodiments, a rigid member surrounding the cell stack 1000 of the battery module 100 may not be provided, such that a heat transfer path from the cell stack 1000 to the lower frame 710 may be simplified and thermal resistance may be reduced. Accordingly, cooling efficiency of the battery pack 10 may be increased.

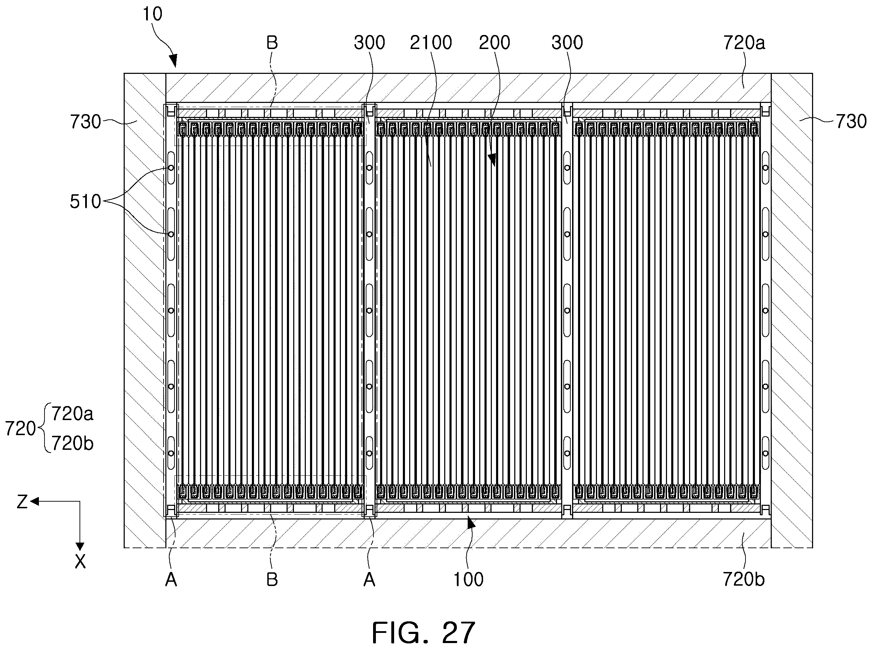

FIG. 27 is a diagram illustrating a portion of a battery pack 10 in which a battery module 100 is accommodated according to an example embodiment. The battery module 100 and battery pack 10 described with reference to FIG. 27 correspond to the battery module 100 and battery pack 10 described with reference to FIGS. 1 to 26, and overlapping descriptions may not be provided.

The battery module 100 may include a plurality of sub-modules 200 and a plurality of end plates 300 opposing each other in a first direction (Z-axis direction) and alternately disposed. The end plate 300 may be disposed between two neighboring sub-modules 200 and on both ends of the battery module 100 in the first direction (Z-axis direction). Accordingly, the battery module 100 may include one more end plate 300 than the number of sub-modules 200. That is, the battery module 100 may include N number of sub-modules 200 and N+1 number of end plates 300.

The end plate 300 may be disposed between the sub-modules 200 and may structurally support the battery module 100. Also, the end plate 300 may block high-temperature gas or flame from being transferred between the sub-modules 200.

The battery pack 10 according to the example embodiments may have a structure in which the end plate 300 disposed between the cell sub-modules 200 may be used in the fastening of the battery module 100 and the pack housing 700. For example, as the first fastening member 510 penetrate through the end plate 300 and is fastened to the pack housing 700, the battery module 100 may be fixed in the battery pack 10. Using a region in which the end plates 300 are disposed as a fastening region, a space in which the battery cell assembly 2000 is disposed between the end plates 300 may be sufficiently secured. For example, referring to FIG. 27, the battery module 100 may use only region A in which the end plate 300 is disposed as a fastening region with the pack housing 700, and may secure the space between the neighboring regions A as a space in which the submodule 200 may be disposed. Also, fastening members such as bolts and nuts fastened to the pack housing in region B may not be provided, such that additional space may be secured. Accordingly, the size of the battery cell 2100 included in the sub-module 200 may be expanded to region B, such that the battery pack 10 having high energy density may be configured.

According to the aforementioned example embodiments, in the battery pack, a heat insulating member may be disposed between a pair of battery cells heat transfer may be blocked or prevented between the battery cells.

Also, the battery module may have a simplified structure having high assembly efficiency.

Also, the battery pack may reduce the heat transfer path of the battery cell, thereby increasing heat dissipation efficiency.

Further, the battery pack may have high energy density in a limited internal space of the pack housing.

## Claims

1. A battery pack (10), comprising:
a pack housing (700) including a lower frame (710) and a side frame (720a); and
one or more battery modules (100) accommodated in the pack housing (700),
wherein the battery module (100) includes:
a plurality of cell stacks (1000) in which a plurality of battery cells (2100) are stacked in a first direction; and
a plurality of end plates (300) fastened to the lower frame (710), and
wherein the plurality of end plates (300) and the plurality of cell stacks (1000) are alternately disposed in the first direction,
wherein the side frame (720a) includes a guide block (721) that blocks spreading of high-temperature and highpressure gas or flame generated in one portion of the battery module (100) to other portions of the battery module (100) or other battery modules (100), and protrudes in a second direction perpendicular to the first direction,
wherein at least one of the plurality of end plates (300) includes an insertion groove (310) into which the guide block (721) is inserted,
wherein a venting passage (722) having at least a portion extending in the first direction is formed in the side frame (720a),
wherein the side frame (720a) includes a plurality of openings (723) communicating with the venting passage (722) and an internal space (R) of the pack housing (700), and
wherein the guide block (721) is disposed between the plurality of openings (723).

2. The battery pack (10) of claim 1, further comprising:
a fastening member (510) fastening the end plate (300) and the lower frame (710) to each other,
wherein the fastening member (510) penetrates through the end plate (300) and is fixed to the lower frame (710).

3. The battery pack (10) of claim 1 or 2, wherein the battery module (100) further includes a heat dissipation member (800) disposed between the cell stack (1000) and the lower frame (710).

4. The battery pack (10) of claim 3, wherein one surface of the heat dissipation member (800) is in contact with at least one of the plurality of battery cells (2100), and the other surface opposite to the one surface of the heat dissipation member (800) is in contact with the pack housing (700).

5. The battery pack (10) of claim 4,
wherein the pack housing (700) further includes a cooling member (740) disposed on the lower frame (710), and
wherein the cooling member (740) is in contact with the other surface of the heat dissipation member (800).

6. The battery pack (10) of anyone of claims 3 to 5, wherein the heat dissipation member (800) includes a thermally conductive adhesive.

7. The battery pack (10) of anyone of the preceding claims,
wherein the battery module (100) further includes a first heat insulating member (320) disposed between at least one of the plurality of end plates (300) and the cell stack (1000) and configured to prevent heat transfer.

8. The battery pack (10) of anyone of the preceding claims,
wherein the battery module (100) further includes a busbar assembly (4000) electrically connected to the cell stack (1000), and
wherein the busbar assembly (4000) opposes the cell stack (1000) in a second direction perpendicular to the first direction.

9. The battery pack (10) of claim 8,
wherein the battery module (100) is comprised of a plurality of battery cell assemblies (2000) comprising:
the plurality of battery cells (2100) opposing each other in the first direction; and
a plurality of support members (2300) spaced apart from each other in the second direction and supporting the plurality of battery cells (2100), and
wherein the busbar assembly (4000) is coupled to at least one of the plurality of support members (2300).

10. The battery pack (10) of claim 9, wherein the battery cell assembly (2000) includes a second heat insulating member (2210) disposed between two of the plurality of battery cells (2100) and configured to prevent heat transfer between the plurality of battery cells (2100).

11. The battery pack (10) of anyone of the preceding claims, wherein the battery module (100) further includes a cover plate (400) coupled to the one or more cell stacks (1000) and the plurality of end plates (300).

12. The battery pack (10) of anyone of the preceding claims, wherein the battery module (100) further includes a plurality of reinforcing members (410) disposed under the plurality of cell stacks (1000) and the plurality of end plates (300), and
wherein a lower surface of the cell stack (1000) is exposed between the plurality of reinforcing members (410) and faces the pack housing (700).

13. The battery pack (10) of anyone of the preceding claims,
wherein the plurality of cell stacks (1000) and the plurality of end plates (300) are alternately disposed in the first direction, and
wherein the battery module (100) includes N number of the cell stacks (1000) and N+1 number of the end plates (300), where N is a natural number of 2 or more.

## Patentansprüche

1. Batteriepack (10), beinhaltend:
ein Packgehäuse (700), das einen unteren Rahmen (710) und einen Seitenrahmen (720a) beinhaltet; und
ein oder mehrere Batteriemodule (100), die in dem Packgehäuse (700) untergebracht sind,
wobei das Batteriemodul (100) beinhaltet:
eine Vielzahl von Zellenstapeln (1000), in denen eine Vielzahl von Batteriezellen (2100) in einer ersten Richtung gestapelt ist; und
eine Vielzahl von Endplatten (300), die an dem unteren Rahmen (710) befestigt sind, und
wobei die Vielzahl von Endplatten (300) und die Vielzahl von Zellenstapeln (1000) abwechselnd in der ersten Richtung angeordnet sind,
wobei der Seitenrahmen (720a) einen Führungsblock (721) beinhaltet, der ein Ausbreiten von Hochtemperatur- und Hochdruckgas oder -flamme, das/die in einem Abschnitt des Batteriemoduls (100) erzeugt wird, zu anderen Abschnitten des Batteriemoduls (100) oder anderen Batteriemodulen (100) blockiert und in einer zweiten, gegenüber der ersten Richtung senkrechten Richtung vorsteht,
wobei mindestens eine der Vielzahl von Endplatten (300) eine Einfügenut (310) beinhaltet, in die der Führungsblock (721) eingefügt ist,
wobei eine Entlüftungspassage (722), die mindestens einen sich in der ersten Richtung erstreckenden Abschnitt aufweist, in dem Seitenrahmen (720a) ausgebildet ist,
wobei der Seitenrahmen (720a) eine Vielzahl von Öffnungen (723) beinhaltet, die mit der Entlüftungspassage (722) und einem Innenraum (R) des Packgehäuses (700) in Verbindung stehen, und
wobei der Führungsblock (721) zwischen der Vielzahl von Öffnungen (723) angeordnet ist.

2. Batteriepack (10) nach Anspruch 1, ferner beinhaltend:
ein Befestigungselement (510), das die Endplatte (300) und den unteren Rahmen (710) aneinander befestigt,
wobei das Befestigungselement (510) durch die Endplatte (300) dringt und an dem unteren Rahmen (710) befestigt ist.

3. Batteriepack (10) nach Anspruch 1 oder 2, wobei das Batteriemodul (100) ferner ein zwischen dem Zellenstapel (1000) und dem unteren Rahmen (710) angeordnetes Wärmeableitungselement (800) beinhaltet.

4. Batteriepack (10) nach Anspruch 3, wobei eine Fläche des Wärmeableitungselements (800) mit mindestens einer der Vielzahl von Batteriezellen (2100) in Kontakt ist und die andere Fläche gegenüber von der einen Fläche des Wärmeableitungselements (800) mit dem Packgehäuse (700) in Kontakt steht.

5. Batteriepack (10) nach Anspruch 4,
wobei das Packgehäuse (700) ferner ein Kühlelement (740) beinhaltet, das an dem unteren Rahmen (710) angeordnet ist, und
wobei das Kühlelement (740) mit der anderen Fläche des Wärmeableitungselements (800) in Kontakt ist.

6. Batteriepack (10) nach einem der Ansprüche 3 bis 5, wobei das Wärmeableitungselement (800) einen wärmeleitfähigen Klebstoff beinhaltet.

7. Batteriepack (10) nach einem der vorhergehenden Ansprüche,
wobei das Batteriemodul (100) ferner ein erstes wärmeisolierendes Element (320) beinhaltet, das zwischen mindestens einer der Vielzahl von Endplatten (300) und dem Zellenstapel (1000) angeordnet ist und dazu konfiguriert ist, eine Wärmeübertragung zu verhindern.

8. Batteriepack (10) nach einem der vorhergehenden Ansprüche,
wobei das Batteriemodul (100) ferner eine Sammelschienenanordnung (4000) beinhaltet, die elektrisch mit dem Zellenstapel (1000) verbunden ist, und
wobei die Sammelschienenanordnung (4000) dem Zellenstapel (1000) in einer zweiten Richtung senkrecht zu der ersten Richtung gegenüberliegt.

9. Batteriepack (10) nach Anspruch 8,
wobei das Batteriemodul (100) aus einer Vielzahl von Batteriezellenanordnungen (2000) besteht, die beinhalten:
die Vielzahl voneinander in der ersten Richtung gegenüberliegenden Batteriezellen (2100); und
eine Vielzahl von Stützelementen (2300), die in der zweiten Richtung voneinander beabstandet sind und die Vielzahl von Batteriezellen (2100) stützen, und
wobei die Sammelschienenanordnung (4000) mit mindestens einem der Vielzahl von Stützelementen (2300) gekoppelt ist.

10. Batteriepack (10) nach Anspruch 9, wobei die Batteriezellenanordnung (2000) ein zweites wärmeisolierendes Element (2210) beinhaltet, das zwischen zwei der Vielzahl von Batteriezellen (2100) angeordnet ist und dazu konfiguriert ist, eine Wärmeübertragung zwischen der Vielzahl von Batteriezellen (2100) zu verhindern.

11. Batteriepack (10) nach einem der vorhergehenden Ansprüche, wobei das Batteriemodul (100) ferner eine mit dem einen oder den mehreren Zellenstapeln (1000) und der Vielzahl von Endplatten (300) gekoppelte Abdeckplatte (400) beinhaltet.

12. Batteriepack (10) nach einem der vorhergehenden Ansprüche,
wobei das Batteriemodul (100) ferner eine Vielzahl von Verstärkungselementen (410) beinhaltet, die unter der Vielzahl von Zellenstapeln (1000) und der Vielzahl von Endplatten (300) angeordnet sind, und
wobei eine untere Fläche des Zellenstapels (1000) zwischen der Vielzahl von Verstärkungselementen (410) freigelegt ist und dem Packgehäuse (700) zugewandt **ist.**

13. Batteriepack (10) nach einem der vorhergehenden Ansprüche,
wobei die Vielzahl von Zellenstapeln (1000) und die Vielzahl von Endplatten (300) in der ersten Richtung abwechselnd angeordnet sind, und
wobei das Batteriemodul (100) eine Anzahl N der Zellenstapel (1000) und eine Anzahl N+1 der Endplatten (300) beinhaltet, wobei N eine natürliche Zahl von 2 oder mehr ist.

## Revendications

1. Bloc-batterie (10), comprenant :
un boîtier de bloc (700) comprenant un cadre inférieur (710) et un cadre latéral (720a) ; et
un ou plusieurs modules de batterie (100) logés dans le boîtier de bloc (700),
où le module de batterie (100) comprend :
une pluralité d'empilements de cellules (1000) dans lesquels une pluralité de cellules de batterie (2100) sont empilées dans une première direction ; et
une pluralité de plaques d'extrémité (300) fixées au cadre inférieur (710), et
où la pluralité de plaques d'extrémité (300) et la pluralité d'empilements de cellules (1000) sont disposées en alternance dans la première direction,
où le cadre latéral (720a) comprend un bloc de guidage (721) qui bloque la propagation de gaz ou de flamme à haute température et à haute pression générés dans une partie du module de batterie (100) vers d'autres parties du module de batterie (100) ou d'autres modules de batterie (100), et fait saillie dans une deuxième direction perpendiculaire à la première direction,
où au moins l'une de la pluralité de plaques d'extrémité (300) comprend une rainure d'insertion (310) dans laquelle le bloc de guidage (721) est inséré,
où un passage de ventilation (722) ayant au moins une partie s'étendant dans la première direction est formé dans le cadre latéral (720a),
où le cadre latéral (720a) comprend une pluralité d'ouvertures (723) communiquant avec le passage de ventilation (722) et un espace interne (R) du boîtier de bloc (700), et
où le bloc de guidage (721) est disposé entre la pluralité d'ouvertures (723).

2. Bloc-batterie (10) selon la revendication 1, comprenant en outre :
un élément de fixation (510) fixant la plaque d'extrémité (300) et le cadre inférieur (710) l'un à l'autre,
où l'élément de fixation (510) pénètre à travers la plaque d'extrémité (300) et est fixé au cadre inférieur (710).

3. Bloc-batterie (10) selon la revendication 1 ou 2, où le module de batterie (100) comprend en outre un élément de dissipation de chaleur (800) disposé entre l'empilement de cellules (1000) et le cadre inférieur (710).

4. Bloc-batterie (10) selon la revendication 3, où une surface de l'élément de dissipation de chaleur (800) est en contact avec au moins une de la pluralité de cellules de batterie (2100), et l'autre surface opposée à la une surface de l'élément de dissipation de chaleur (800) est en contact avec le boîtier de bloc (700).

5. Bloc-batterie (10) selon la revendication 4,
où le boîtier de bloc (700) comprend en outre un élément de refroidissement (740) disposé sur le cadre inférieur (710), et
où l'élément de refroidissement (740) est en contact avec l'autre surface de l'élément de dissipation de chaleur (800).

6. Bloc-batterie (10) selon l'une quelconque des revendications 3 à 5, où l'élément de dissipation de chaleur (800) comprend un adhésif thermoconducteur.

7. Bloc-batterie (10) selon l'une quelconque des revendications précédentes,
où le module de batterie (100) comprend en outre un premier élément d'isolation thermique (320) disposé entre au moins une de la pluralité de plaques d'extrémité (300) et l'empilement de cellules (1000) et configuré pour empêcher un transfert de chaleur.

8. Bloc-batterie (10) selon l'une quelconque des revendications précédentes,
où le module de batterie (100) comprend en outre un ensemble barre omnibus (4000) connecté électriquement à l'empilement de cellules (1000), et
où l'ensemble barre omnibus (4000) est opposé à l'empilement de cellules (1000) dans une deuxième direction perpendiculaire à la première direction.

9. Bloc-batterie (10) selon la revendication 8,
où le module de batterie (100) est composé d'une pluralité d'ensembles de cellules de batterie (2000) comprenant :
la pluralité de cellules de batterie (2100) opposées les unes aux autres dans la première direction ; et
une pluralité d'éléments de support (2300) espacés les uns des autres dans la deuxième direction et supportant la pluralité de cellules de batterie (2100), et
où l'ensemble barre omnibus (4000) est couplé à au moins l'un de la pluralité d'éléments de support (2300).

10. Bloc-batterie (10) selon la revendication 9, où l'ensemble de cellules de batterie (2000) comprend un deuxième élément d'isolation thermique (2210) disposé entre deux de la pluralité de cellules de batterie (2100) et configuré pour empêcher un transfert de chaleur entre la pluralité de cellules de batterie (2100).

11. Bloc-batterie (10) selon l'une quelconque des revendications précédentes, où le module de batterie (100) comprend en outre une plaque de couverture (400) couplée aux un ou plusieurs empilements de cellules (1000) et à la pluralité de plaques d'extrémité (300).

12. Bloc-batterie (10) selon l'une quelconque des revendications précédentes, où le module de batterie (100) comprend en outre une pluralité d'éléments de renforcement (410) disposés sous la pluralité d'empilements de cellules (1000) et la pluralité de plaques d'extrémité (300), et
où une surface inférieure de l'empilement de cellules (1000) est exposée entre la pluralité d'éléments de renforcement (410) et fait face au boîtier de bloc (700).

13. Bloc-batterie (10) selon l'une quelconque des revendications précédentes,
où la pluralité d'empilements de cellules (1000) et la pluralité de plaques d'extrémité (300) sont disposées en alternance dans la première direction, et
où le module de batterie (100) comprend un nombre N d'empilements de cellules (1000) et un nombre N+1 de plaques d'extrémité (300), où N est un nombre naturel de 2 ou plus.
